# EUROPÄISCHE PATENTSCHRIFT

(11) **EP 2 235 407 B1**
(45) Veröffentlichungstag und Bekanntmachung des Hinweises auf die Patenterteilung: **06.06.2012**
(21) Anmeldenummer: 09702823.7
(22) Anmeldetag: 07.01.2009
(51) Int. Cl.: F16K 1/44

(54) **SITZREINIGUNGSFÄHIGES DOPPELSITZVENTIL**
SEAT CLEANING-CAPABLE DOUBLE-SEAT VALVE
SOUPAPE A DOUBLE SIEGE, AVEC POSSIBILITE DE NETTOYAGE DE SIEGE

(30) Priorität: 16.01.2008 DE 102008004597
(43) Veröffentlichungstag der Anmeldung: 06.10.2010
(73) Patentinhaber: GEA Tuchenhagen GmbH, 21514 Büchen (DE)
(72) Erfinder: BURMESTER, Jens, 23883 Grambek (DE); SUEDEL, Matthias, 23626 Ratekau (DE)
(74) Vertreter: Mönkemeyer, Philipp
(86) Internationale Anmeldenummer: PCT/EP2009/000041
(87) Internationale Veröffentlichungsnummer: WO 2009/090005

(56) Entgegenhaltungen:
- EP-A- 0 545 846
- EP-A- 0 646 741
- WO-A-2007/054131
- DE-A1- 19 842 603
- DE-C1- 19 618 235

## Beschreibung

### TECHNISCHES GEBIET

Die Erfindung betrifft ein sitzreinigungsfähiges Doppelsitzventil mit zwei seriell angeordneten, relativ zueinander bewegbaren, als Schieberkolben ausgebildeten Schließgliedern, die in der Schließstellung des Doppelsitzventils das Überströmen von Fluiden von einem Ventilgehäuseteil in ein anderes durch eine die Ventilgehäuseteile miteinander verbindende Verbindungsöffnung verhindern und die sowohl in der Schließ- als auch in der Offenstellung einen Leckagehohlraum begrenzen, der mit der Umgebung des Doppelsitzventils über einen, bezogen auf eine vertikale Normallage des Doppelsitzventils, am unten liegenden, zweiten Schließglied angeformten rohrförmigen Schaft, in dem eine Ablaufbohrung angeordnet ist, verbunden ist. Das zweite, abhängig angetriebene Schließglied ist dabei größer als das erste, unabhängig angetriebene Schließglied ausgebildet, so dass demzufolge das Doppelsitzventil nach unten öffnet und die Drainage des Leckagehohlraumes gleichfalls nach unten erfolgt. Die Schließglieder werden über Ventilstangen betätigt, die beide nach oben aus einem Ventilgehäuse heraus- und in einen Antrieb hineingeführt sind.

### STAND DER TECHNIK

Eine sog. lackagefrei schaltende Doppelventilanordnung, die wesentliche Merkmale des einleitend beschriebenen sitzreinigungsfähigen Doppelsitzventils aufweist, ist aus der EP 0 646 741 A1 bekannt. Dieses bekannte Doppelsitzventil besitzt zwei als Schieberkolben ausgebildete Schließglieder, es öffnet, bezogen auf eine vertikale Normallage, nach unten und die Drainage des Leckagehohlraumes erfolgt gleichfalls nach unten, und zwar über einen am unten liegenden Schließglied angeformten rohrförmigen Schaft, in dem eine Ablaufbohrung angeordnet und der nach unten aus dem Ventilgehäuse herausgeführt ist. Die beiden Schließglieder sind unabhängig voneinander jeweils durch einen der Öffnungsbewegung entgegengerichteten Teilhub in eine Spülstellung überführbar, in der das jeweilige Schließglied von seinem Ventilsitz frei ist und an einem mit Spülmitteldurchtritten versehenen Gehäuseanschlag anliegt. Die Spülmitteldurchtritte begrenzen dabei die Reinigungsmittelmenge bei der jeweiligen Sitzreinigung. Die Schließglieder werden über Ventilstangen betätigt, die beide nach oben aus einem Ventilgehäuse heraus- und in einen Antrieb hineingeführt sind. Um die Ausbaubarkeit des oben liegenden, kleineren und des unten liegenden, größeren Schließgliedes in einem Zuge nach oben zu ermöglichen, sind die Ventilsitze mit Dichtringen versehen, die von Gehäuseeinsätzen gehalten sind. Diese Gehäuseeinsätze sind von der dem rohrförmigen Schaft gegenüberliegenden Seite her in das Ventilgehäuse eingesetzt.

Bei dem bekannten Doppelsitzventil nach der EP 0 646 741 A1 ist von Vorteil, wie bei allen anderen Doppelsitzventilen, die nach unten öffnen und einen nach unten aus dem Ventilgehäuse herausgeführten Leckageablauf aufweisen, dass in der Offenstellung des Doppelsitzventils der Durchtrittsquerschnitt einer die beiden Ventilgehäuseteile miteinander verbindenden Verbindungsöffnung nicht durch den Querschnitt des Leckageablaufs eingeengt wird. Dies reduziert insbesondere dann die vom Durchtrittsquerschnitt der Verbindungsöffnung determinierte Nennweite des Ventilgehäuses um ein bis zwei Nennweiten, wenn, wie beispielsweise in den USA gefordert, der Durchtrittsquerschnitt des Leckageablaufs zwischen Leckagehohlraum und Umgebung des Doppelsitzventils gleich dem größten Durchtrittsquerschnitt der an das Doppelsitzventil angeschlossenen Rohrleitung sein muss.

Nachteilig ist bei dem bekannten Doppelsitzventil nach der EP 0 646 741 A1, dass dieses allenfalls leckagearm und nicht, wie der Titel zwar vorgibt, leckagefrei schaltet. Die Schaltleckage resultiert aus der Tatsache, dass bei jedem Öffnungs-oder Schließhub in dem Raum, der zwischen den beiden Sitzdichtungen einerseits ventilgehäuseseitig und andererseits schließgliedseitig begrenzet wird, Flüssigkeit eingeschlossen wird, und dass diese Flüssigkeit nach Trennung der beiden Schließglieder an der zwischen beiden wirksamen Mitteldichtung in den Leckagehohlraum und von dort in den Leckageablauf gelangt. Nachteilig ist weiterhin, dass die jeweilige Sitzreinigungsströmung, die durch die Spülmitteldurchtritte am zugeordneten Gehäuseanschlag gelangt und vorwiegend axial/radial orientiert ist, mehr oder weniger unkontrolliert und verwirbelt die in der Schließlage befindliche Sitzdichtung des anderen Schließgliedes beaufschlagt.

Mit dem bekannten Doppelsitzventil nach der EP 0 646 741 A1 lässt sich, wie gewünscht, die Reinigungsmittelmenge bei der jeweiligen Sitzreinigung limitieren. Die Forderungen, die an ein derartiges Doppelsitzventil in bestimmten Ländern gestellt werden, sind jedoch weitergehend. So wird beispielsweise in den USA gefordert, dass bei größeren Dichtungsdefekten oder gar dem Verlust einer der beiden Sitzdichtungen im Zuge der Sitzreinigung des anderen Schließgliedes über den jeweiligen Dichtungsdefekt bzw. den Sitzbereich ohne Sitzdichtung kein Reinigungsmittel hindurchtreten darf. Unter diesen Bedingungen stellt sich an ein derartiges Doppelsitzventil nicht nur die Forderung nach einer Begrenzung der Reinigungsmittelmenge und Vermeidung einer Direktbeaufschlagung der Sitzbereiche im Zuge der Sitzreinigung, sondern auch nach einer möglichst verwirbelungsfreien Abfuhr der Sitzreinigungsströmung zunächst in den Leckagehohlraum und von dort in die Umgebung, ohne dass der jeweils geschlossene Sitzbereich von dieser Sitzreinigungsströmung direkt angeströmt oder druckerhöhend beaufschlagt wird.

Unter Direktbeaufschlagung wird jede auf die den Sitzbereich begrenzenden Wandungen senkrecht gerichtete Geschwindigkeitskomponente aus der jeweiligen Sitzreinigungsströmung verstanden. Es hat sich nämlich gezeigt, dass jede diesbezügliche Direktbeaufschlagung zu einer Umwandlung kinetischer Strömungsenergie in statischen Druck führt. Abhängig von dem Auftreffwinkel der Strömung auf die angeströmte Wand- oder Körperfläche ergibt sich eine Verzweigungsströmung mit einer sog. "Verzweigungsstromlinie", wobei letztere die Strömung in zwei Hälften teilt. Die Verzweigungsstromlinie selbst läuft auf den sog. "Staupunkt" auf, so dass an dieser Stelle die Geschwindigkeit gleich Null ist. Der Druckzuwachs in Folge dieses Abstoppens der Geschwindigkeit erhält auch die Bezeichnung "Staudruck". Die vorstehend dargestellten druckerhöhenden Mechanismen generieren eine Leckageströmung über den jeweiligen Drosselspalt und die defekte oder die gänzlich nicht mehr vorhandene Sitzdichtung. Ein direktes Auftreffen der Sitzreinigungsströmung auf die den Leckagehohlraum begrenzenden Flächen ist daher in jedem Falle kontraproduktiv.

Ein, bezogen auf eine vertikale Normallage, nach oben öffnendes Doppelsitzventil, das wegen seiner Funktion, durch spaltweites Öffnen seiner Sitzflächen eine Reinigung der jeweils freigelegten Sitzfläche zu gestatten, auch als sitzreinigungsfähiges Doppelsitzventil bezeichnet wird, ist aus der DE 196 08 792 C2 bekannt. Bei diesem Doppelsitzventil kann die Reinigungsmittelmenge bei der jeweiligen Sitzreinigung durch sog. Drosselspalte kontrolliert und sehr eng bemessen werden. Darüber hinaus wird eine Direktbeaufschlagung der jeweils geschlossenen Sitzfläche im Zuge der Sitzreinigung der anderen Sitzfläche durch Führung und Lenkung der Sitzreinigungsströmungen verhindert.

Das sitzreinigungsfähige Doppelsitzventil nach der DE 196 08 792 C2 verfügt über zwei sog. Sitzreinigungsstellungen, wobei die erste Sitzreinigungsstellung durch einen dem Öffnungshub entgegengerichteten ersten Teilhub erzeugt wird. In dieser Stellung bildet der leckageraumseitig am ersten Schließglied angeordnete zylindrische Ansatz mit der zugeordneten zylindrischen ersten Sitzfläche einen sog. Drosselspalt, über den die aus dem benachbarten ersten Ventilgehäuseteil herangeführte Reinigungsmittelmenge begrenzt werden kann. Die Sitzreinigungsstellung des zweiten Schließgliedes erfolgt durch einen dem Öffnungshub gleichgerichteten zweiten Teilhub, wobei in der Teiloffenstellung der leckageraumseitig am zweiten Schließglied angeordnete zylindrische Ansatz mit dem zugeordneten Teil der Verbindungsöffnung einen zweiten Drosselspalt bildet, der die in dieser Sitzreinigungsstellung erzeugte zweite Sitzreinigungsströmung mengenmäßig limitiert.

Da die beiden Schließglieder und die zugeordneten zylindrischen Ansätze unterschiedliche Durchmesser aufweisen, sind die jeweils zugeordneten Abschnitte der Verbindungsöffnung ebenfalls im Durchmesser unterschiedlich, so dass zwischen diesen beiden Durchmessern eine Übergangsfläche zustande kommt. Bei der Sitzreinigungsstellung des ersten Schließgliedes strömt die erste Sitzreinigungsströmung an der zylindrischen Sitzfläche entlang und trifft auf die stirnseitige Begrenzung am zweiten Schließglied, wobei durch den Durchmesserunterschied der beiden Abschnitte der Verbindungsöffnung zumindest ein direktes Auftreffen der ersten Sitzreinigungsströmung auf den zweiten Drosselspalt und damit den Sitzbereich des zweiten Schließgliedes verhindert wird. Bei der Sitzreinigungsstellung des zweiten Schließgliedes wird die zweite Sitzreinigungsströmung an der den Durchmesserunterschied zwischen den Abschnitten der Verbindungsöffnung überbrückenden Übergangsfläche radial nach innen umgelenkt und an der oberen stirnseitigen Begrenzungsfläche des ersten Schließgliedes vorbeigeführt. Auch in diesem Falle wird dadurch ein unmittelbares Auftreffen der zweiten Sitzreinigungsströmung auf den ersten Drosselspalt und damit den Sitzbereich des ersten Schließgliedes verhindert.

Aus der WO 2007/054131 A1 ist ein sitzreinigungsfähiges Doppelsitzventil gemäß dem Oberbegriff des Anspruchs 1 bekannt, welches gegenüber dem vorstehend beschriebenen Stand der Technik unter anderem dahingehend verbessert ist, dass eine möglichst verwirbelungsfreie Ableitung der Sitzreinigungsströmung in den und aus dem Leckagehohlraum sichergestellt ist und eine druckerhöhende Direktbeaufschlagung der Sitzbereiche sicher vermieden wird. Dies wird u.a. durch eine Übergangsfläche zwischen den beiden Sitzflächen der Schließglieder und eine ringförmige Ausnehmung in Form einer speziellen Umlenkfläche im abhängig angetriebenen, größeren Schließglied erreicht. Zwischen den beiden Schließgliedem ist eine Mitteldichtung angeordnet, so dass auch bei dieser Schließgliedkonfiguration im strengen Sinne eher von einem leckagearmen als von einem leckagefreien Schalten gesprochen werden kann.

Aus der WO 2007/054134 A1 ist weiterhin ein sitzreinigungsfähiges Doppelsitzventil bekannt, welches gegenüber dem vorstehend beschriebenen Stand der Technik gemäß WO 2007/054131 A1 durch weitestgehend leckagefreies Schalten verbessert ist. Dies wird dadurch erreicht, dass das abhängig angetriebene, größere Schließglied an seinem dem unabhängig angetriebenen, kleineren Schließglied zugewandten Ende eine Ausnehmung mit einer im wesentlichen zylindrischen, mit der Sitzfläche des kleineren Schließgliedes fluchtenden Umfangswand besitzt und die Ausnehmung so dimensioniert ist, um während der Öffnungsbewegung einen Endabschnitt und eine radiale Dichtung des kleineren Schließgliedes dichtend aufzunehmen, bevor das größere Schließglied öffnet.

Aus der DE 198 42603 ( Vgl. Fig. 2) ist ein Doppelsitzventil gemäß dem Oberbegriff des Anspruchs 20 bekannt.

Es ist Aufgabe der vorliegenden Erfindung, bei einem sitzreinigungsfähigen, nach unten öffnenden Doppelsitzventil ein leckagefreies Schalten zu erreichen und bei der jeweiligen Sitzreinigung eine druckerhöhende Direktbeaufschlagung des geschlossenen Sitzbereichs zu vermeiden sowie eine möglichst verwirbelungsfreie Ableitung der Sitzreinigungsströmung in den und aus dem Leckagehohlraum sicherzustellen.

### ZUSAMMENFASSUNG DER ERFINDUNG

Die Aufgabe wird durch ein Doppelsitzventil mit den Merkmalen des Anspruchs 1 oder des unabhängigen Anspruchs 20 gelöst. Vorteilhafte Ausgestaltungen des sitzreinigungsfähigen Doppelsitzventils gemäß der Erfindung sind in den jeweiligen Unteransprüchen beschrieben.

Zur Lösung der der Erfindung zugrunde liegenden Aufgabe besteht der erfinderischer Grundgedanke darin, das erfindungsgemäße sitzreinigungsfähige Doppelsitzventil mit all jenen Merkmalen auszustatten, die in den vorstehend insgesamt kurz umrissenen bekannten Doppelsitzventilen jeweils teilweise verwirklicht sind und die in der Summe folgende wünschenswerten Eigenschaften und Merkmale eines sitzreinigungsfähigen Doppelsitzventils, bezogen auf seine vertikale Normallage, generieren:
- zwei als Schieberkolben ausgebildete, in Reihe geschaltete Schließglieder, deren jeweilige Sitzdichtung mit der zugeordneten zylindrischen Sitzfläche radial, d.h. im sog. Gleiteingriff zusammenwirkt;
- leckagefrei schaltende Schließgliedgestaltung und -kinematik;
- Öffnungsbewegung des Doppelsitzventils nach unten;
- Drainage des Leckagehohlraumes nach unten;
- Betätigung der Schließglieder durch Verstellstangen, die gemeinsam nach oben aus dem Ventilgehäuse zu einem Antrieb herausgeführt sind;
- Ausbaubarkeit der beiden Schließglieder nach oben;
- Vermeidung einer druckerhöhenden Direktbeaufschlagung des in der Schließlage befindlichen Sitzbereichs bei der jeweiligen Sitzreinigung;
- verwirbelungsfreie Ableitung der Sitzreinigungsströmung in den und aus dem Leckagehohlraum.

Darüber hinaus ist nach einer vorteilhaften Ausführungsform
- eine kontrollierte Begrenzung der Reinigungsmittelmenge bei der Sitzreinigung durch Drosselspalte
vorgesehen.

Ein erster Lösungsgedanke besteht darin, die bei der jeweiligen Sitzreinigung austretende Sitzreinigungsströmung möglichst verwirbelungs- und hindernisfrei in den Leckagehohlraum einzuleiten und von dort in gleicher Weise in die Umgebung abzuführen. Dies gelingt durch eine die Sitzreinigungsströmungen im Leckagehohlraum führende und lenkende Strömungskontur in Gestalt einer Umlenkfläche, die in einer bevorzugten ersten Ausführungsform des vorgeschlagenen Doppelsitzventils in einer dem Leckagehohlraum zugewandten Stirnseite eines ringförmigen Schieberteils in Form einer ringförmigen Ausnehmung ausgebildet ist. Diese Strömungskontur sorgt bei der Sitzreinigung des unten liegenden, zweiten Schließgliedes dafür, dass die zweite Sitzreinigungsströmung zunächst dem Wandverlauf im Bereich der zweiten Sitzfläche ablösungsfrei folgt. Anschließend erfolgt in der ringförmigen Ausnehmung an der dort vorgesehenen Umlenkfläche eine stoßfreie Umlenkung dieser zweiten Sitzreinigungsströmung, so dass letztere in eine zentrisch im zweiten Schließglied angeordnete Ablaufbohrung gelangen kann, ohne mit dem zweiten Schließglied im Bereich seiner den Leckagehohlraum berandenden Bereiche staudruckbildend zu kollidieren.

Ein weiterer Lösungsgedanke besteht darin, dass der axial verschiebliche, zylindrische ringförmige Schieberteil sowohl in der Schließ- als auch in der Offenstellung des Doppelsitzventils radial außenseits in einer zylindrischen dritten Sitzfläche, die in einer die Ventilgehäuseteile miteinander verbindenden Verbindungsöffnung ausgebildet ist, dichtend Aufnahme findet und radial innenseits in einer mit der Verbindungsöffnung fluiddurchlässig verbundenen Durchgangsbohrung eine zylindrische erste Sitzfläche ausbildet, die koaxial zur Verbindungsöffnung verläuft. Erfindungsgemäß ist weiterhin vorgesehen, dass die zweite Sitzfläche einen Durchmesser aufweist, der kleiner ist als der Durchmesser der dem Schieberteil zugeordneten dritten Sitzfläche, wobei eine Übergangsfläche zwischen der zweiten und der dritten Sitzfläche vorgesehen ist.

Mit dem nach oben ausbaubaren Schieberteil wird darüber hinaus erreicht, dass beide Schließglieder nach oben ausbaubar sind, obgleich das oben liegende, erste Schließglied im Durchmesser kleiner als das unten liegende, zweite Schließglied ausgeführt ist, wobei diese Durchmesserrelation notwendige Voraussetzung dafür ist, dass das Doppelsitzventil nach unten öffnet.

Bei der Strömungsführung der durch Anlüften des ringförmigen Schieberteils generierten ersten und dritten Sitzreinigungsströmung ist wesentlich, dass die dritte Sitzreinigungsströmung von der Übergangsfläche zwischen der zweiten und der dritten Sitzfläche und die erste Sitzreinigungsströmung von dem freigelegten Spalt zwischen dem ersten Schließglied und dem Schieberteil so geführt werden, dass diese verwirbelungsfrei in eine Ablaufbohrung im rohrförmigen Schaft des zweiten Schließgliedes gelangen.

Mit einem weiteren Lösungsgedanken wird leckagefreies Schalten des Doppelsitzventils verwirklicht. Dieser besteht darin, dass das erste Schließglied an einem ersten Endabschnitt eine erste Dichtung aufweist, die radial in der ersten Sitzfläche abdichtet, wobei das zweite Schließglied an seinem dem ersten Schließglied zugewandten Ende eine Ausnehmung mit einer im wesentlichen zylindrischen, mit der ersten Sitzfläche fluchtenden Umfangswand besitzt und die Ausnehmung so dimensioniert ist, um während der Öffnungsbewegung den ersten Endabschnitt und die radiale erste Dichtung des ersten Schließgliedes dichtend aufzunehmen, bevor das zweite Schließglied öffnet.

Zur kontrollierten Begrenzung der Reinigungsmittelmenge bei der jeweiligen Sitzreinigung sieht eine vorteilhafte Ausführungsform vor, dass am ersten Schließglied leckageraumabgewandt ein zylindrischer erster Ansatz angeordnet ist, der nach Vollzug des ersten Teilhubs mit der zugeordneten ersten Sitzfläche einen ringförmigen ersten Drosselspalt bildet. Weiterhin wird vorgeschlagen, dass am Schieberteil leckageraumseitig ein zylindrischer dritter Ansatz angeordnet ist, der nach Vollzug des ersten Teilhubs mit der zugeordneten dritten Sitzfläche einen ringförmigen dritten Drosselspalt bildet. Eine andere Ausführungsform sieht am zweiten Schließglied leckageraumseitig einen zylindrischen zweiten Ansatz vor, der nach Vollzug des zweiten Teilhubs mit der zugeordneten zweiten Sitzfläche einen ringförmigen zweiten Drosselspalt bildet.

Da in der Schließstellung des Doppelsitzventils ein axialer Abstand zwischen dem ersten und dem zweiten Schließglied vorgesehen ist, wird zur Optimierung des leckagefreien Schaltvorganges darüber hinaus vorgeschlagen, dass, zeitlich gesehen, unmittelbar vor der Öffnungsbewegung des ersten Schließgliedes das zweite Schließglied durch einen der Öffnungsbewegung entgegengerichteten Abholhub mit seiner Stirnfläche an den Schieberteil herangeführt wird und dort, unmittelbar an die erste Sitzfläche angrenzend, zur Anlage kommt.

Um das zweite Schließglied weitestgehend frei von Kräften aus dem Druck des im zweiten Ventilgehäuseteil anstehenden Fluids zu halten, sieht ein weiterer Vorschlag vor, dass der rohrförmige Schaft in seinem das zugeordnete zweite Ventilgehäuseteil durchdringenden Bereich als zweiter Druckausgleichskolben ausgebildet ist, dessen Außendurchmesser im Grenzfall bis an den Außendurchmesser des zweiten Schließgliedes heranreicht.

Dabei ist gemäß einer weiteren vorteilhaften Ausführungsform der Durchtrittsquerschnitt der im rohrförmigen Schaft ausgebildeten Ablaufbohrung dem Durchtrittsquerschnitt der größten an die Ventilgehäuseteile angeschlossenen Rohrleitung gleich, wodurch auch die schärfsten Bemessungsvorschriften, wie beispielsweise in den USA, erfüllt werden.

Um den Schieberteil auch über einen die Schließglieder betätigenden Antrieb anzutreiben, sieht ein weiterer Vorschlag vor, dass der Schieberteil über fluiddurchlässige Verbindungsstege mit einem topfförmigen, zum Schieberteil hin offenen Aufnahmezylinder verbunden ist, der das zugeordnete erste Ventilgehäuseteil verschieblich und abgedichtet durchdringt und sich an seinem dem Schieberteil abgewandten Ende in einer als Hohlstange ausgeführten dritten Verstellstange fortsetzt, die in den Antrieb hineingeführt ist.

Der vorstehend beschriebene Aufnahmezylinder wird vorteilhaft, wie dies weiter vorgesehen ist, von einer mit dem ersten Schließglied verbundenen, als Hohlstange ausgeführten und in den Antrieb hineingeführten ersten Verstellstange verschieblich, konzentrisch durchdrungen. An der Eintrittsstelle in den Aufnahmezylinder ist die erste Verstellstange gegen diesen abgedichtet und im Eingriffsbereich mit dem Aufnahmezylinder ist sie als ein erster Druckausgleichskolben ausgebildet ist, dessen Außendurchmesser im Grenzfall bis an den Außendurchmesser des ersten Schließgliedes heranreicht. Die vorstehende Anordnung erlaubt es, sowohl die produktbeaufschlagten Bereiche des Aufnahmezylinders als auch jene der ersten Verstellstange aus dem Innenraum des ersten Ventilgehäuseteils heraus im Durchfluss zu reinigen.

Es wird in diesem Zusammenhang weiter vorgeschlagen, dass eine mit dem zweiten Schließglied verbundene zweite Verstellstange die als Hohlstange ausgeführte erste Verstellstange konzentrisch durchdringt und in den Antrieb hineingeführt ist. Dadurch gelingt es, mit dem einzigen, auf einer Seite des Doppelsitzventils angeordneten, vorzugsweise alle notwendigen Verstelleinrichtungen integrierenden Antrieb sowohl die beiden Schließglieder als auch den Schieberteil zu betätigen.

Die Reinigung der Durchführung des Aufnahmezylinders durch das zugeordnete Ventilgehäuseteil, die Reinigung des zwischen dem Aufnahmezylinder und dem ersten Druckausgleichskolben gebildeten Ringraums sowie die Reinigung des Ringraumes zwischen der ersten und der zweiten Ventilstange jeweils im Durchfluss kann durch Reinigungsmittel erfolgen, welches entweder von außerhalb des Doppelsitzventils oder aus dem Innenraum des Ventilgehäuses durch Maßnahmen an den Durchführungen und eine jeweils geeignete Teilhubbewegung des zu reinigenden Zylinders, Kolbens oder der Stangen herangeführt wird (siehe beispielsweise DE 38 35 944 C2). Die Ableitung der zur jeweiligen Reinigung notwendigen Reinigungsmittelmengen kann entweder in die Umgebung des Doppelsitzventils oder über eine innere Ableitung, auf dem Weg jeweils über den Leckagehohlraum, erfolgen. Entsprechend geeignete Lösungen sind aus dem Stand der Technik hinreichend bekannt.

Eine vorteilhafte Ausführungsform des Schieberteils sieht vor, dass dieser in seiner Schließstellung mit einer an seiner Stirnseite angeordneten Anschlagfläche an der Übergangsfläche anliegt, und zwar unmittelbar an die zweite Sitzfläche angrenzend, dass im weiteren Verlauf der Stirnseite des dritten Ansatzes die ringförmige zweite Ausnehmung vorgesehen ist, deren Kontur, im Meridianschnitt gesehen, einen knickfreien Verlauf aufweist und radial außenseits mit einem ersten Abschnitt der rotationssymmetrischen Umlenkfläche beginnt (Anfangspunkt der Kontur und radial innenseits mit einem letzten Abschnitt unter einem spitzen dritten Umlenkwinkel in die zylindrische Mantelebene der ersten Sitzfläche ausmündet (Ausmündungspunkt der Kontur).

Wesentlich ist die stoßfreie Umlenkung der Sitzreinigungsströmung in der Umlenkfläche. Dies gelingt erfindungsgemäß dadurch, dass, im Meridianschnitt gesehen, die Umlenkfläche eine Kontur mit knickfreiem Verlauf aufweist, wobei ein Richtungsvektor im Ausmündungspunkt der Umlenkfläche unter den vorg. Bedingungen in die zentrisch im zweiten Schließglied angeordnete Ablaufbohrung weist. Es ist weiterhin wesentlich, dass die Umlenkfläche und die Anschlagfläche eine zweite Umlaufkante ausbilden, die in der Schließstellung des Schieberteils unmittelbar an einen ersten Endabschnitt der zweiten Sitzfläche angrenzt.

Es ist weiter wesentlich, dass die Anschlagfläche unter den genannten Bedingungen an der Übergangsfläche im Ventilgehäuse unmittelbar, vollständig umlaufend und, so weit dies bei festem bzw. metallischem Kontakt möglich ist, dicht am Leckagehohlraum anliegt. Hierzu ist eine hinreichende zentrische Führung des Schieberteils im Ventilgehäuse und eine hinreichende Zentrizität aller an dieser Führung beteiligten Bauteile des Doppelsitzventil erforderlich.

Um eine Direktbeaufschlagung des in seiner Schließlage befindlichen Sitzbereichs des zweiten Schließgliedes bei der Sitzreinigung zu vermeiden, ist weiterhin vorgesehen, dass eine dem Leckagehohlraum zugewandte stirnseitige Begrenzung des zweiten Schließgliedes einen axialen Sicherheitsabstand vom Richtungsvektor an einer als eine erste Umlaufkante ausgebildeten Austrittsstelle der Übergangsfläche in den ersten Endabschnitt besitzt.

Um einer Verkantung des Schieberteils im Zuge seiner Schließbewegung zusätzlich entgegen zu wirken, weist gemäß einer vorteilhaften Ausgestaltung ein zweiter Endabschnitt des Schieberteils radial außenseits im Anschluss an die Anschlagfläche eine ringförmige umlaufende Anschrägung auf, die gegen die Anschlagfläche unter einem Anschrägungswinkel verläuft, der derart bemessen ist, dass eine zwischen der Anschrägung und einem dritten Durchmesser des Schieberteils durch Abrundung gebildete dritte Umlaufkante, in radialer Richtung gesehen, so weit wie möglich nach außen verlagert und so nah wie zulässig an den durch den Ausrundungsradius bestimmten Verlauf der Übergangsfläche herangeführt ist und dort eine ringförmig umlaufende Zentrierstelle bildet.

Nach einer vorteilhaften Ausgestaltung ist der Sicherheitsabstand des zweiten Schließgliedes vom Richtungsvektor an der Austrittsstelle der Übergangsfläche in den ersten Endabschnitt derart bemessen, dass dieser wenigstens so groß wie die Summe aller Fertigungstoleranzen der Bauteile des Doppelsitzventils ist, die in der Schließstellung des zweiten Schließgliedes dessen geringsten axialen Abstand zur Übergangsfläche bestimmen.

Ein weiterer Vorschlag sieht vor, dass ein Richtungsvektor am Anfangspunkt der Kontur der Umlenkfläche mit dem ersten Endabschnitt der zweiten Sitzfläche fluchtet. Diese bevorzugte Ausführungsform stellt einen weitestgehenden stoßfreien Eintritt der zweiten Sitzreinigungsströmung in die Umlenkfläche und damit in die Ausnehmung im Schieberteil sicher. Die vorgenannte Bedingung ist sowohl für einen zylindrischen ersten Endabschnitt einzuhalten, der mit der zylindrischen zweiten Sitzfläche fluchtet, als auch für einen konisch sich erweiternden ersten Endabschnitt (einer sog. ersten Einfahrschräge), der im Rahmen der Erfindung gleichfalls vorgesehen ist. Der konisch sich erweiternde Endabschnitt kann dabei ausschließlich gekrümmte oder gekrümmte und gerade Konturelemente aufweisen.

Befriedigende Ergebnisse hinsichtlich einer stoßfreien Umlenkung werden gemäß einem weiteren Vorschlag auch noch erreicht, wenn ein Richtungsvektor am Anfangspunkt der Kontur der Umlenkfläche vom Richtungsvektor des ersten Endabschnitts um einen zweiten Umlenkwinkel von weniger als 15 Grad abweicht, wo bei diesbezüglich eine Abweichung in beiden Richtungen zulässig ist. Ein größerer zweiter Umlenkwinkel im Uhrzeigersinn führt zur Staudruckbildung und in der anderen Richtung zur Ablösung und ist daher kontraproduktiv.

Die erfindungsgemäß vorgeschlagene erste Einfahrschräge erleichtert das Einfahren der zweiten Dichtung in die zylindrische zweite Sitzfläche und vermindert dadurch den Verschleiß dieser zweiten Dichtung. Strömungstechnisch ist diese Einfahrschräge jedoch eher von Nachteil, da sie die zweite Sitzreinigungsströmung durch Vergrößerung des Strömungsquerschnittes verzögert und damit eine Ablösungsgefahr für die Strömung darstellt. Es wird in diesem Zusammenhang vorgeschlagen, den die erste Einfahrschräge ausbildenden ersten Endabschnitt durch wenigstens eine Kegelmantelfläche darzustellen. Damit die erste Sitzreinigungsströmung an der Kontur dieser Kegelmantelfläche nicht ablöst, wird vorgeschlagen, den ersten Endabschnitt um einen Anstellwinkel zu neigen, der im Bereich zwischen 0 und 15 Grad, bevorzugt im Bereich zwischen 5 bis 15 Grad und hier wiederum bevorzugt mit 15 Grad ausgeführt ist.

Es hat sich weiterhin als günstig mit Blick auf eine Vermeidung jeglicher Staudruckbildung herausgestellt, wenn die von der Übergangsfläche und dem ersten Endabschnitt gebildete erste Umlaufkante mit einer kleinstmöglichen ersten Eckenabrundung abgerundet ist. Im Idealfall wäre hier eine scharfkantige Ausführung vorzusehen, die jedoch aus Gründen der Festigkeit und aus fertigungstechnischen und praktischen Gründen (Gefährdung der zweiten Dichtung) nicht zulässig ist.

Gemäß einem weiteren Vorschlag bildet die dritte Sitzfläche im Ventilgehäuse mit der Übergangsfläche einen stumpfen oder einen senkrechten ersten Umlenkwinkel, wobei der senkrechte Umlenkwinkel (90 Grad) bevorzugt wird, da hierdurch eine sichere, kollisionsfreie Überströmung des zweiten Schließgliedes am ehesten sichergestellt ist. Der Übergang zwischen der dritten Sitzfläche und der Übergangsfläche wird dabei mit einem Ausrundungsradius gerundet.

Um Staudruckbildung bei dem Eintritt der zweiten Sitzreinigungsströmung in die Umlenkfläche im Schieberteil zu vermeiden, sieht ein weiterer Vorschlag vor, dass die von der Anschlagfläche und der Umlenkfläche gebildete zweite Umlaufkante mit einer kleinstmöglichen zweiten Eckenabrundung abgerundet ist. Ein scharfkantiger Übergang in diesem Bereich ist aus Gründen der Festigkeit und aus fertigungstechnischen und praktischen Gründen nicht zulässig, ein relativ großer Abrundungsradius ist kontraproduktiv und führt zur unerwünschten Staudruckbildung.

Im Sinne einer optimalen Strömungsführung der zweiten Sitzreinigungsströmung hat sich eine Kontur der Umlenkfläche bewährt, die eine Abfolge von Abschnitten aufweist, wobei der erste Abschnitt, jeder übernächste und der letzte Abschnitt jeweils geradlinig ausgeführt sind und wobei diese Abschnitte mit größtmöglichen Umlenkradien tangential abgerundet und miteinander verbunden sind.

Ein in gleicher Weise befriedigendes Strömungsergebnis wird gemäß einem weiteren Vorschlag dadurch erreicht, dass sich die Kontur aus einer Abfolge gekrümmter Abschnitte zusammensetzt, die an ihren jeweiligen Übergangsstellen jeweils eine gemeinsame Tangente besitzen. Eine andere Ausführungsform sieht vor, dass die Kontur aus einem einzigen Abschnitt kontinuierlich veränderter Krümmungen besteht. Schließlich wird auch vorgeschlagen, dass die Kontur aus einem einzigen Abschnitt mit konstanter Krümmung gebildet ist.

Um Wirbel- und Staudruckbildung nicht nur im Bereich der vorstehend beschriebenen Sitzflächen des Doppelsitzventils zu vermeiden, ist es von Vorteil, wenn auf jegliche Einbauten und Hindernisse im übrigen Leckagehohlraum, so weit dies konstruktiv möglich ist, verzichtet wird. Diesbezüglich sieht daher ein weiterer Vorschlag vor, dass sich die zweite Verstellstange fliegend durch die Ablaufbohrung hindurch fortsetzt und an einem dem ersten Schließglied abgewandten Ende des zweiten Schließgliedes mit letzterem über wenigstens eine im Wesentlichen radial orientierte Traverse fest verbunden ist. Dadurch werden die ansonsten im Bereich des Leckagehohlraums üblichen Streben und anderen Verbindungsmittel vermieden und an ein relativ weit vom Leckagehohlraum entferntes Ende, wo sie keine störenden Einflüsse auf die Strömungsführung mehr haben können, verlagert.

Die Schließ- und die Offenstellung der Schließglieder werden, wie dies vorgeschlagen wird, über letztere betätigende Verstellstangen mittels eines ersten bzw. eines zweiten Stellungsmelders, die in einem auf der dem Doppelsitzventil abgewandten Seite eines Antriebs in einem Steuerkopf angeordnet sind, detektiert und in der Regel an eine Steuerung rückgemeldet. Bei den Stellungsmeldern handelt es sich vorzugsweise um berührungslos arbeitende Meldeeinrichtungen, wie beispielsweise magnetoresistive Sensoren. In gleicher Weise erfolgt die Stellungsmeldung für den zweiten Teilhub des zweiten Schließgliedes mittels eines dritten Stellungsmelders, während, gemäß einem weiteren Vorschlag, der erste Teilhub des Schieberteils über einen vierten Stellungsmelder erfasst wird, der den mit dem Schieberteil verbundenen, aus dem ersten Ventilgehäuseteil herausgeführten Aufnahmezylinder detektiert und der zwischen dem ersten Ventilgehäuseteil und dem Antrieb angeordnet ist.

Eine zweite grundlegende Ausführungsform des Doppelsitzventils gemäß der Erfindung unterscheidet sich von der bevorzugten ersten Ausführungsform dadurch, dass der in zwei Positionen axial verschiebliche, zylindrische ringförmige Schieberteil durch einen ortsfesten, zylindrischen ringförmigen zweiten Sitzring ersetzt wird. Dieser zweite Sitzring bildet radial innenseits in einer mit der Verbindungsöffnung fluiddurchlässig verbundenen Durchgangsbohrung die bei der ersten Ausführungsform bereits beschriebene zylindrische erste Sitzfläche aus und er stützt sich über wenigstens einen modifizierten Verbindungssteg in dem ersten Ventilgehäuseteil, auf dessen dem zweiten Sitzring gegenüberliegenden Seite, unverschieblich ab. Die Sitzreinigung des ersten Schließgliedes erfolgt im Unterschied zur ersten Ausführungsform dadurch, dass das erste Schließglied durch einen der Öffnungsbewegung entgegengerichteten ersten Teilhub in seine Sitzreinigungsstellung überführt wird. Die ringförmige Ausnehmung in Form einer Umlenkfläche ist nunmehr an entsprechender Stelle im in den Durchtrittsquerschnitt der zweiten Sitzfläche hineinkragenden Teil des zweiten Sitzrings ausgebildet.

Die Begrenzung der Reinigungsmittelmenge bei der Sitzreinigung des ersten Schließgliedes erfolgt in einer vorteilhaften Ausführungsform über einen an diesem leckageraumseitig angeordneten zylindrischen ersten Ansatz, der mit der zugeordneten ersten Sitzfläche einen ringförmigen ersten Drosselspalt bildet.

Die im Zusammenhang mit der ersten Ausführungsform beschriebenen Merkmale vorteilhafter Ausgestaltungen sind auf die zweite Ausführungsform uneingeschränkt übertragbar, soweit diese Übertragungen den zweiten Sitzring und die durch diesen zweiten Sitzring modifizierte Ausführungsform des Doppelsitzventils technisch ausführbar und in vorteilhafter Weise ausgestaltet. Die Stellungsmeldung bezüglich der Schließ- und Offenstellung des Ventils sowie bezüglich des zweiten Teilhubs erfolgt in gleicher Weise wie bei der ersten Ausführungsform. Da die Sitzreinigung des ersten Schließglieds nunmehr über einen an diesem vollzogenen ersten Teilhub des ersten Schließgliedes durchgeführt wird, erfolgt die Stellungsmeldung für den ersten Teilhub über die erste Verstellstange mittels eines fünften Stellungsmelders, der in dem Steuerkopf angeordnet ist.

### KURZBESCHREIBUNG DER ZEICHNUNGEN

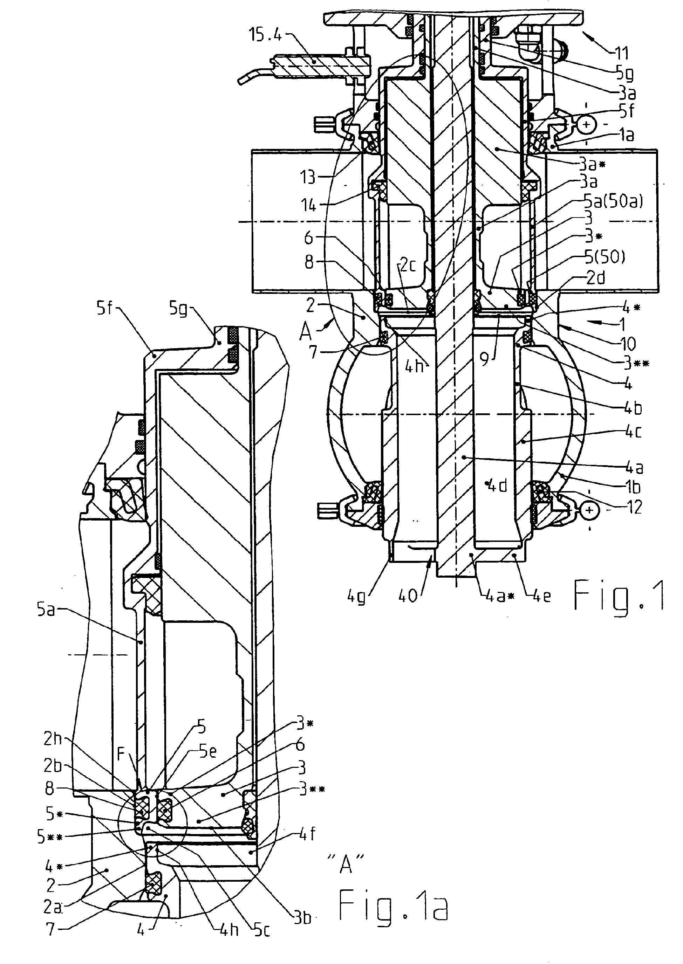

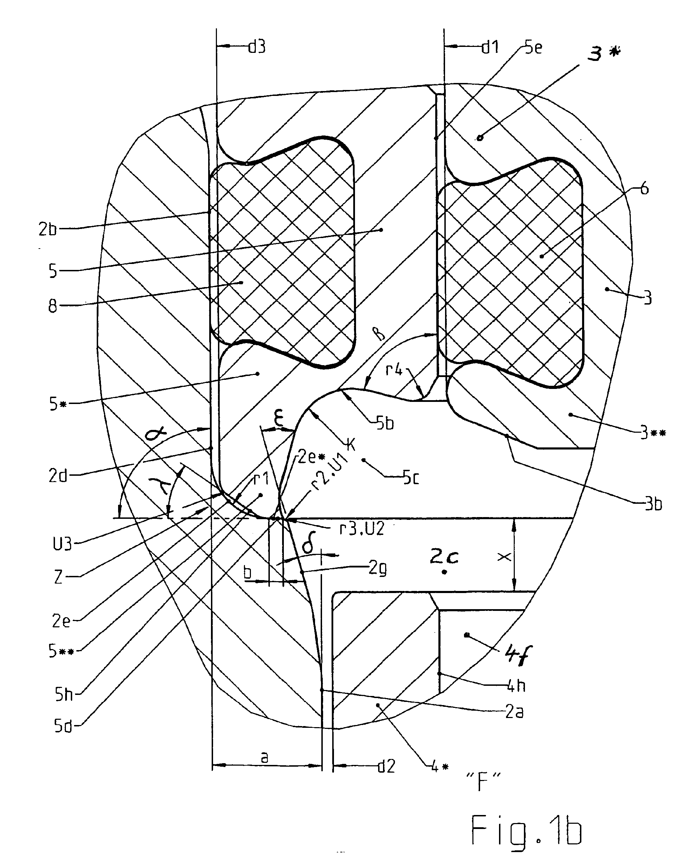

Eine eingehendere Darstellung ergibt sich aus der folgenden Beschreibung und den beigefügten Figuren der Zeichnung sowie aus den Ansprüchen. Während die Erfindung in den verschiedensten Ausführungsformen realisiert ist, wird in der Zeichnung ein Ausführungsbeispiel einer bevorzugten ersten Ausführungsform des vorgeschlagenen sitzreinigungsfähigen Doppelsitzventils dargestellt und nachfolgend nach Aufbau und Funktion beschrieben unter der Voraussetzung, dass diese erste Ausführungsform nur ein Beispiel für die Erfindung darstellt, nicht aber die Erfindung auf dieses speziell dargestellte Beispiel beschränkt ist. Eine grundlegende zweite Ausführungsform ergibt sich aus den Ansprüchen und der Beschreibung in Verbindung mit zwei gegenüber der grundlegenden ersten Ausführungsform modifizierten Bauteilen, wobei lediglich deren Bezugszeichen in Figur 1 eingetragen sind. Es zeigen
- **Figur 1**: im Längs- und Meridianschnitt das erfindungsgemäße sitzreinigungsfähige Doppelsitzventil unterhalb seines Antriebes, wobei sich das Doppelsitzventil in seiner Schließstellung befindet;
- **Figur 1a**: in vergrößerter Darstellung einen Längs- und Meridianschnitt im Sitzbereich und dem nach oben angrenzenden Bereich gemäß einer in **Figur 1** mit "A" gekennzeichneten Einzelheit;
- **Figur 1b**: in vergrößerter Darstellung eine in **Figur 1a** mit "F" gekennzeichnet Einzelheit im Bereich der ringförmigen zweiten Ausnehmung und der angrenzenden Bereiche;
- **Figur 2**: im Längs- und Meridianschnitt das erfindungsgemäße sitzreinigungsfähige Doppelsitzventil gemäß **Figur 1**, wobei sich das Doppelsitzventil in einer sog. Abholstellung des unten liegenden, zweiten Schließgliedes befindet;
- **Figur 2a**: in vergrößerter Darstellung einen Längs- und Meridianschnitt im Sitzbereich und dem nach oben angrenzenden Bereich gemäß einer in **Figur 2** mit "B" gekennzeichneten Einzelheit;
- **Figur 3**: im Längs- und Meridianschnitt das erfindungsgemäße sitzreinigungsfähige Doppelsitzventil gemäß **Figur 1**, wobei sich das Doppelsitzventil in seiner Offenstellung befindet;
- **Figur 3a**: in vergrößerter Darstellung einen Längs- und Meridianschnitt im Sitzbereich und dem nach oben angrenzenden Bereich gemäß einer in **Figur 3** mit "C" gekennzeichneten Einzelheit;
- **Figur 4**: im Längs- und Meridianschnitt das erfindungsgemäße sitzreinigungsfähige Doppelsitzventil gemäß **Figur 1**, wobei sich das Doppelsitzventil in seiner Sitzreinigungsstellung für das unten liegende, zweite Schließglied befindet;
- **Figur 4a**: in vergrößerter Darstellung einen Längs- und Meridianschnitt im Sitzbereich und dem nach oben angrenzenden Bereich gemäß einer in **Figur 4** mit "D" gekennzeichneten Einzelheit;
- **Figur 5**: im Längs- und Meridianschnitt das erfindungsgemäße sitzreinigungsfähige Doppelsitzventil gemäß **Figur 1**, wobei sich das Doppelsitzventil in seiner Sitzreinigungsstellung für das oben liegende, erste Schließglied befindet und
- **Figur 5a**: in vergrößerter Darstellung einen Längs- und Meridianschnitt im Sitzbereich und dem nach oben angrenzenden Bereich gemäß einer in **Figur 5** mit "E" gekennzeichneten Einzelheit.

### DETAILLIERTE BESCHREIBUNG

Das erfindungsgemäße Doppelsitzventil 1 (**Figuren 1, 1a****,** **1b**) in einer grundlegenden ersten Ausführungsform besteht im Wesentlichen aus einem Ventilgehäuse 10 mit einem, bezogen auf seine vertikale Normallage, obenseitig angeordneten ersten und einem darunter angeordneten, zweiten Ventilgehäuseteil 1a bzw. 1b, zwei unabhängig voneinander bewegbaren Schließgliedern 3 und 4 mit den jeweils zugeordneten Verstellstangen 3a bzw. 4a und einem ersten Sitzring 2, der über eine innenseitige Verbindungsöffnung 2c eine Verbindung zwischen den Ventilgehäuseteilen 1 a, 1b herstellt.

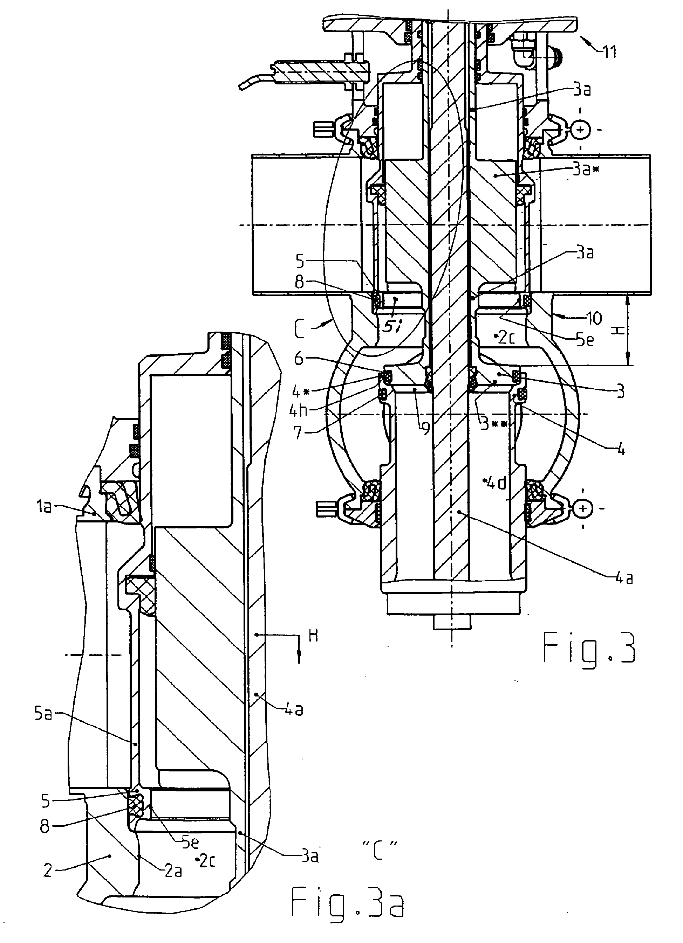

Ein axial verschieblicher, zylindrischer ringförmiger Schieberteil 5 findet radial außenseits in einer im oberen Teil der Verbindungsöffnung 2c ausgebildeten zylindrischen dritten Sitzfläche 2b, die dort durch eine ringförmige erste Ausnehmung 2d gebildet ist, dichtend Aufnahme (**Figuren 1****,** **1b**), und der Schieberteil 5 bildet radial innenseits in einer mit der Verbindungsöffnung 2c fluiddurchlässig verbundenen Durchgangsbohrung 5i (s. **Figur 3**) eine zylindrische erste Sitzfläche 5e aus, die koaxial zur Verbindungsöffnung 2c verläuft. Die außenseitige Abdichtung des Schieberteils 5 erfolgt über eine in diesem angeordnete, radial wirkende dritte Dichtung 8 (Dichtung im sog. Gleiteingriff).

Das als Schieberkolben ausgebildete, oben liegende, erste Schließglied 3 (aktives oder unabhängig angetriebenes Schließglied) findet in der Schließstellung des Doppelsitzventils 1 in der ersten Sitzfläche 5e dichtend Aufnahme. Hierzu ist in dem ersten Schließglied 3 eine erste Dichtung 6 vorgesehen, die ausschließlich durch radiale Vorspannung mit der ersten Sitzfläche 5e zusammenwirkt (radiale Dichtung im Gleiteingriff). Das ebenfalls als Schieberkolben ausgebildete, unten liegende, zweite Schließglied 4 (passives oder abhängig angetriebenes Schließglied) wirkt in der Schließstellung des Doppelsitzventils 1 mit einer zweiten Sitzfläche 2a zusammen, die zylindrisch ausgeführt und im unteren Teil der Verbindungsöffnung 2c ausgebildet ist. Die Abdichtung erfolgt über eine im zweiten Schließglied 4 angeordnete zweite Dichtung 7, die radial gegenüber der zweiten Sitzfläche 2a abdichtet (Dichtung im sog. Gleiteingriff).

Die beiden Schließglieder 3, 4 bilden sowohl in der dargestellten Schließ- als auch in einer Offenstellung (**Figuren 1****,** **3**) zwischen sich einen Leckagehohlraum 9, der über eine Ablaufbohrung 4d, die einen unterhalb am zweiten Schließglied 4 angeformten rohrförmigen Schaft 4b/4c zentrisch durchdringt, mit der Umgebung des Doppelsitzventils 1 verbunden ist. Der rohrförmige Schaft 4b/4c wird durch einen sich an das zweite Schließglied 4 anschließenden Verbindungsteil 4b und einen sich an letzterem fortsetzenden zweiten Druckausgleichskolben 4c gebildet.

Bei dem erfindungsgemäßen Doppelsitzventil 1 ist vorgesehen, die mechanisch notwendigen Verbindungsstellen zwischen dem zweiten Schließglied 4 und der zweiten Verstellstange 4a in Form von drei über den Umfang gleichmäßig verteilt angeordnete Traversen 4e, die die Ablaufbohrung 4d sternförmig und in radialer Richtung durchsetzen, ein Stück weit vom Leckagehohlraum 9 entfernt, vorzugsweise an das dem zweiten Schließglied 4 abgewandte Ende des zweiten Druckausgleichskolbens 4c hin, zu verlagern. Die feste Verbindung mit letzterem erfolgt über einen umlaufenden Ring 4g, mit dem die Traversen 4e radial außenseits fest verbunden sind. Zweckmäßig sind die Traversen 4e, der Ring 4g und ein Verstellstangenabschnitt 4a* in einem einstückigen Anschweißteil 40 zusammengefasst. Durch diese Anordnung werden negative Rückwirkungen auf die Strömungsverhältnisse und das Strömungsbild im Leckagehohlraum 9 vermieden.

Die zweite Sitzfläche 2a weist einen Durchmesser auf, der kleiner ist als der Durchmesser der dem Schieberteil 5 außenseits zugeordneten dritten Sitzfläche 2b, wobei eine Übergangsfläche 2e zwischen der zweiten und der dritten Sitzfläche 2a, 2b vorgesehen ist (**Figur 1b**).

Das in seiner Schließstellung in der ersten Sitzfläche 5e dichtend Aufnahme findende erste Schließglied 3 kommt im Zuge seiner Öffnungsbewegung (**Figur 3**) am zweiten Schließglied 4 dichtend zur Anlage und überführt letzteres bei der weiteren Öffnungsbewegung gleichfalls in eine Offenstellung H. Das erste Schließglied 3 weist an einem ersten Endabschnitt 3** die erste Dichtung 6 auf, die radial in der ersten Sitzfläche 5e abdichtet. Das zweite Schließglied 4 besitzt an seinem dem ersten Schließglied 3 zugewandten Ende eine Ausnehmung 4f mit einer im Wesentlichen zylindrischen, mit der ersten Sitzfläche 5e fluchtenden Umfangswand 4h (**Figuren 1a****,** **1b**), wobei die Ausnehmung 4f so dimensioniert ist, um während der Öffnungsbewegung den ersten Endabschnitt 3** und die radiale erste Dichtung 6 des ersten Schließgliedes 3 dichtend aufzunehmen, bevor das zweite Schließglied 4 öffnet.

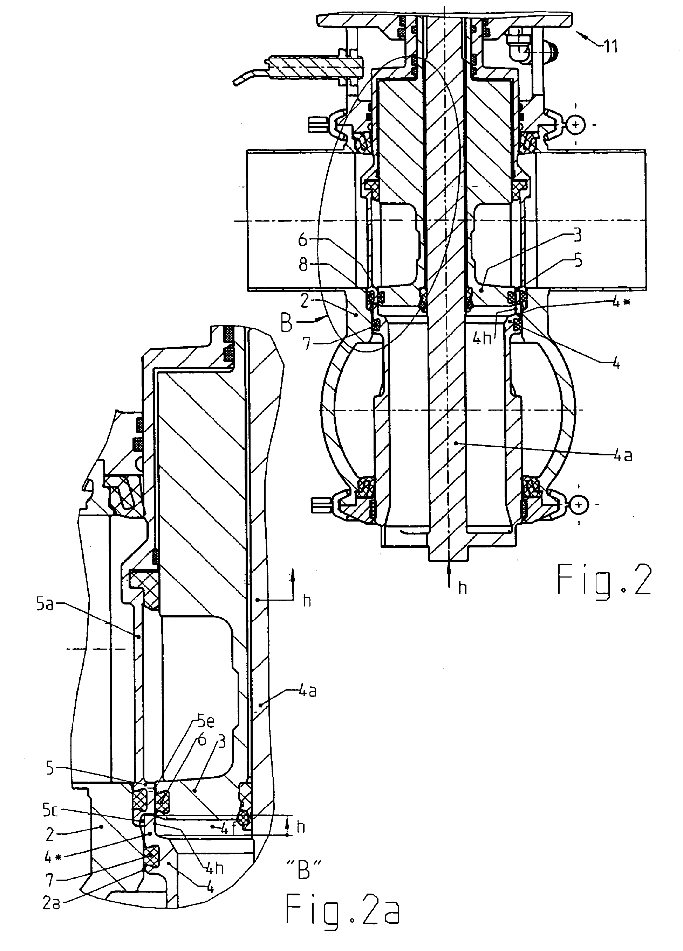

Das erfindungsgemäße Doppelsitzventil 1 weist eine weitere Besonderheit auf, die bislang im Stand der Technik ohne Vorbild ist. Es handelt sich um die sog. Abholstellung des zweiten Schließgliedes 4, bevor das unabhängig angetriebene erste Schließglied 3 seine Öffnungsbewegung mit dem Ziel, das Doppelsitzventil 1 aus seiner Schließ- in die volle Offenstellung H zu überführen, beginnt. Zu diesem Zweck (**Figuren 2** und **2a**) wird das zweite Schließglied 4, entgegen seiner späteren Öffnungsbewegung, um einen Abholhub h mit der Stirnfläche eines zylindrischen zweiten Ansatzes 4* an den Schieberteil 5 herangeführt und kommt dort, unmittelbar an die erste Sitzfläche 5e angrenzend, zur Anlage. Mit dem Eingriffsbereich des zweiten Ansatzes 4* korrespondiert eine ringförmige zweite Ausnehmung 5c im Schieberteil 5 (s. auch **Figur 1b**), so dass der zweite Ansatz 4* im Zuge der Abholbewegung in die zweite Ausnehmung 5c hineingefahren wird und dort am radial innenseitigen Ende der zweiten Ausnehmung 5c, dem letzten Abschnitt einer Kontur K einer Umlenkfläche 5b, zur Anlage gelangt. Nunmehr kann das erste Schließglied 3 seine erste Dichtung 6, ohne einen axialen, umlaufenden Spalt überbrücken zu müssen, unmittelbar in die mit der ersten Sitzfläche 5e fluchtende Umfangswand 4h und damit in die Ausnehmung 4f im zweiten Schließglied 4 hineinfahren.

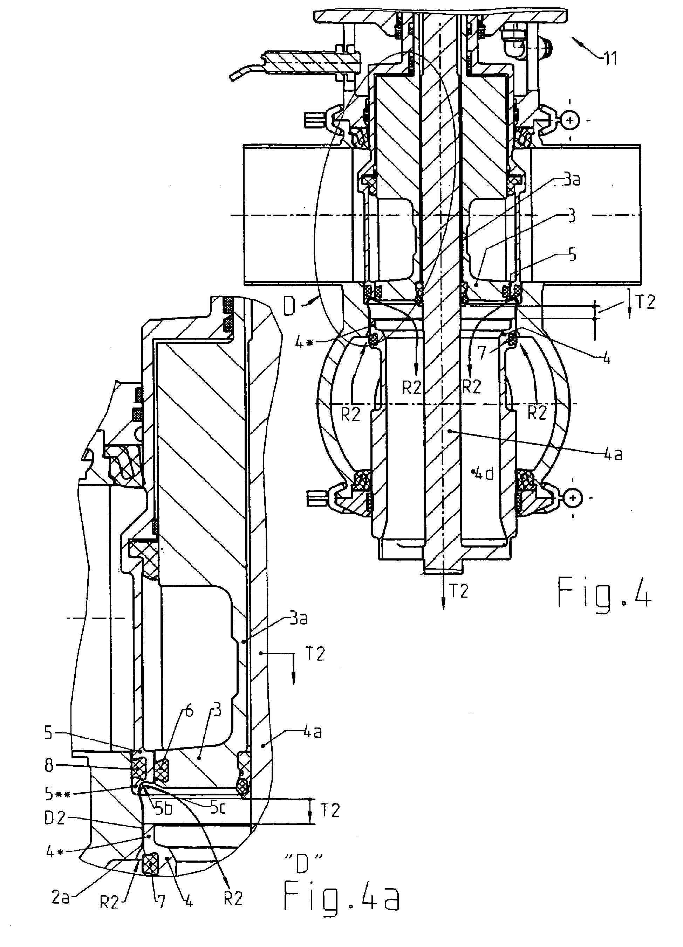

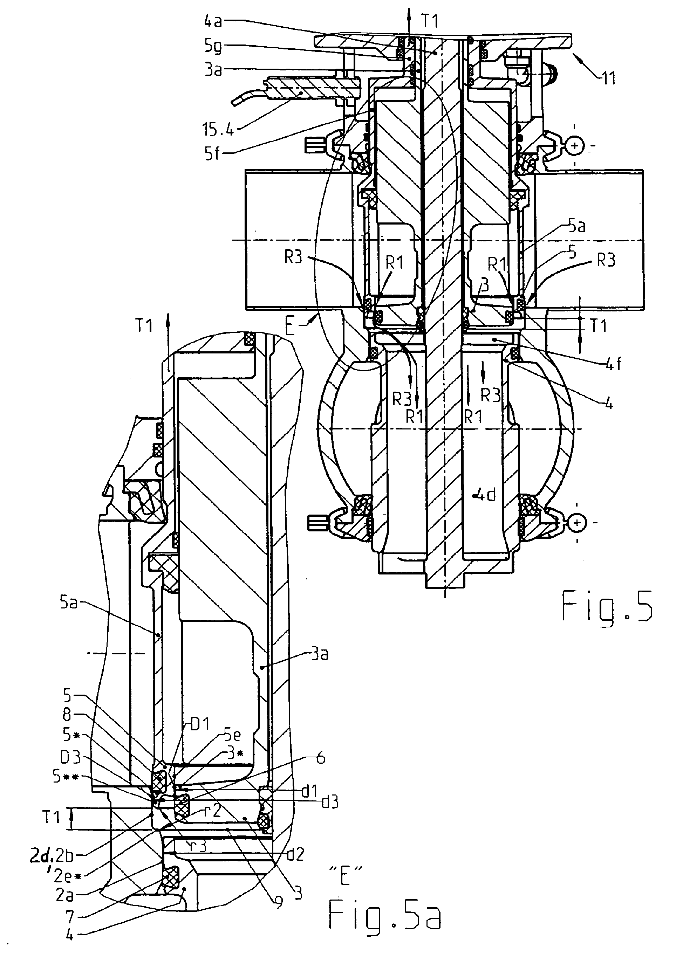

Das Doppelsitzventil 1 verfügt über Sitzreinigungsstellungen für die Schließglieder 3, 4 und den Schieberteil 5 zwecks Spülung ihrer koaxialen Sitzflächen 5e, 2a, 2b, wobei das zweite Schließglied 4 durch einen der Öffnungsbewegung gleichgerichteten zweiten Teilhub T2 (**Figuren 4, 4a**) und der Schieberteil 5 durch einen der Öffnungsbewegung entgegengerichteten ersten Teilhub T1 (**Figuren 5, 5a**) in seine jeweilige Sitzreinigungsstellung überführbar sind. Der leckageraumseitig am zweiten Schließglied 4 vorgesehene zylindrische zweite Ansatz 4* ist außenseitig mit einem zweiten Durchmesser d2 ausgestattet (**Figur 1b**), der nach Vollzug des zweiten Teilhubs T2 mit der zuordneten zweiten Sitzfläche 2a einen ringförmigen zweiten Drosselspalt D2 bildet (**Figur 4a**), durch den eine zweite Sitzreinigungsströmung R2 definiert begrenzt wird. Am ersten Schließglied 3 ist leckageraumabgewandt ein mit einem außenseitigen ersten Durchmesser d1 bemessener zylindrischer erster Ansatz 3* angeordnet (**Figuren 5a****,** **1b**), der nach Vollzug des ersten Teilhubs T1 mit der zugeordneten ersten Sitzfläche 5e einen ringförmigen ersten Drosselspalt D1 bildet, durch den eine erste Sitzreinigungsströmung R1 definiert begrenzt wird. Am Schieberteil 5 ist leckageraumseitig ein mit einem außenseitigen dritten Durchmesser d3 bemessener zylindrischer dritter Ansatz 5* angeordnet (**Figuren 5a****,** **1b**), der nach Vollzug des ersten Teilhubs T1 mit der zugeordneten dritten Sitzfläche 2b einen ringförmigen dritten Drosselspalt D3 bildet, durch den eine dritte Sitzreinigungsströmung R3 definiert begrenzt wird.

Der halbe Durchmesserunterschied zwischen der ringförmigen ersten Ausnehmung 2d und der zweiten Sitzfläche 2a (**Figur 1b**) ist mit einer radialen Breite a gekennzeichnet. In diesem radialen Erstreckungsbereich a ist die Übergangsfläche 2e zwischen der zweiten Sitzfläche 2a und der ringförmigen ersten Ausnehmung 2d vorgesehen, wobei der in die zweite Sitzfläche 2a ausmündende Endabschnitt der Übergangsfläche 2e mit der zylindrischen Mantelfläche der ringförmigen ersten Ausnehmung 2d einen vorzugsweise senkrechten ersten Umlenkwinkel α bildet. Dabei weist die ringförmige erste Ausnehmung 2d einen mit einem Ausrundungsradius r1 ausgeführten gerundeten Übergang zur Übergangsfläche 2e auf, wobei der Ausrundungsradius r1 vorzugsweise mit r1 < a ausgeführt ist. Die radiale Breite a wird so groß ausgeführt, dass die in der Sitzreinigungsstellung des Schieberteils 5 und damit auch des ersten Schließgliedes 3 aus dem dritten Drosselspalt D3 in den Leckagehohlraum 9 austretende dritte Sitzreinigungsströmung R3 (**Figuren 5, 5a**) an der Übergangsfläche 2e zum Zentrum des Leckagehohlraumes 9 hin und sicher über das zweite Schließglied 4 hinweg umgelenkt wird. Um sicherzustellen, dass die dritte Sitzreinigungsströmung R3 nicht vorzeitig in Richtung des zweiten Schließgliedes 4 abgelenkt wird, ist eine von der Übergangsfläche 2e und einem ersten Endabschnitt 2g der zweiten Sitzfläche 2a gebildete erste Umlaufkante U1 (**Figur 1b**) mit einer kleinstmöglichen ersten Eckenabrundung r2 abgerundet, wodurch an dieser Stelle eine definierte Strömungsabrissstelle entsteht.

Die aus dem ersten Drosselspalt D1 austretende erste Sitzreinigungsströmung R1 ist zum Einen durch die Lage des ersten Drosselspaltes D1 und zum Anderen zur dritten Sitzreinigungsströmung R3 von vornherein so positioniert, dass die beiden Sitzreinigungsströmungen R1, R3 nicht auf den Sitzbereich der zweiten Dichtung 7 gerichtet sind. Darüber hinaus muss die radiale Breite a der Übergangsfläche 2e auch die Realisierung einer ventilgehäuseseitigen Anschlagfläche 2e* (**Figuren 1b****,** **5a**) für den Schieberteil 5 sicherstellen, damit ein dem Leckagehohlraum 9 unmittelbar benachbarter fester (metallischer) Anschlag des Schieberteils 5 am ersten Sitzring 2 zu verwirklichen ist. Die ventilgehäuseseitige Anschlagfläche 2e* korrespondiert mit einer an der Stirnseite des zylindrischen dritten Ansatzes 5* vorgesehenen Anschlagfläche 5d (**Figur 1b**), die, in radialer Richtung gesehen, eine Breite b aufweist. Die ventilgehäuseseitige Anschlagfläche 2e* und die schieberteilseitige Anschlagfläche 5d sind jeweils vorzugsweise geradlinig ausgeführt; der Ausrundungsradius r1 der Übergangsfläche 2e schließt sich vorzugsweise tangential an die Anschlagfläche 2e* an.

In der dem Leckagehohlraum 9 zugewandten Stirnseite des Schieberteils 5 ist die ringförmige zweite Ausnehmung 5c in Form der Umlenkfläche 5b angeordnet (**Figuren 1a, 1b**). In einer vorteilhaften Ausgestaltung weist die Kontur K dieser Umlenkfläche 5b, im Meridianschnitt gesehen, einen knickfreien Verlauf auf, und sie beginnt radial außenseits mit einem ersten Abschnitt der vorzugsweise rotationssymmetrisch ausgebildeten Umlenkfläche 5b (Anfangspunkt der Kontur K) und sie mündet radial innenseits mit einem letzten Abschnitt unter einem spitzen dritten Umlenkwinkel β in die zylindrische Mantelebene der ersten Sitzfläche 5e aus (Ausmündungspunkt der Kontur K). Der Übergang zwischen dem letzten Abschnitt der Umlenkfläche 5b und der ersten Sitzfläche 5e ist mit einer dritten Eckenabrundung r4 abgerundet, die eine Einfahrschräge für die erste Dichtung 6 des ersten Schließgliedes 3 in die erste Sitzfläche 5e am Schieberteil 5 bildet. Die Umlenkfläche 5b und die Anschlagfläche 5d bilden eine zweite Umlaufkante U2 aus, die mit einer zweiten Eckenabrundung r3 abgerundet ist. Letztere sollte, um staudruckbildende Effekte zu vermeiden, so klein, wie dies festigkeitsbedingt, fertigungstechnisch und praktisch möglich ist, ausgeführt sein.

Die zweite Umlaufkante U2 grenzt in der Schließstellung des Schieberteils 5 (**Figuren 1** bis **4a**) unmittelbar an den ersten Endabschnitt 2g der zweiten Sitzfläche 2a an. Der knickfreie Verlauf der Kontur K setzt sich vorteilhaft aus mehreren Abschnitten zusammen und der Richtungsvektor im Endpunkt des letzten Abschnitts weist in die zentrisch im zweiten Schließglied 4 angeordnete Ablaufbohrung 4d, ohne mit dem zweiten Schließglied 4 im Bereich seiner der den Leckagehohlraum 9 berandenden Bereiche staudruckbildend zu kollidieren. Eine dem Leckagehohlraum 9 zugewandte stirnseitige Begrenzung des zweiten Ansatzes 4* besitzt einen axialen Sicherheitsabstand x vom Richtungsvektor an einer Austrittsstelle der Übergangsfläche 2e in den ersten Endabschnitt 2g, die als vorstehend erwähnte erste Umlaufkante U1 ausgebildet ist (**Figur 1b**).

In der Offenstellung des Doppelsitzventils (**Figur 3**), wenn ein voller Öffnungshub H realisiert ist, wird deutlich, dass das in der Umfangswand 4h über seine erste Dichtung 6 radial dichtende erste Schließglied 3 für eine sichere Abdichtung der beiden Schließglieder 3, 4 zwischen dem Innenraum des Ventilgehäuses 10 einerseits und dem Leckagehohlraum 9 andererseits sorgt.

**Figur 1b** verdeutlicht weiterhin, dass der an die zweite Umlaufkante U2 unmittelbar angrenzende erste Abschnitt der Kontur K der Umlenkfläche 5b mit dem ersten Endabschnitt 2g fluchtet. Dabei kann der erste Endabschnitt 2g als konischer Abschnitt (erste Einfahrschräge) mit ausschließlich gekrümmten oder gekrümmten und geraden Konturelementen ausgebildet sein, der sich mit einem Abrundungsradius an die zweite Sitzfläche 2a anschließt und sich zum Schieberteil 5 hin öffnet. Der erste Endabschnitt 2g ist um einen Anstellwinkel δ gegen die zweite Sitzfläche 2a geneigt. Der Anstellwinkel δ ist im Bereich 0 bis 15 Grad, bevorzugt im Bereich 5 bis 15 Grad und hier wiederum bevorzugt mit δ = 15 Grad ausgeführt.

Eine weitere Optimierung des ersten Endabschnitts 2g in Form einer weiter verbesserten Einfahrschräge zeichnet sich gemäß **Figur 1b** dadurch aus, dass der erste Endabschnitt 2g durch zwei mit einem nicht bezeichneten Abrundungsradius abgerundet ineinander übergehende Kegelmantelflächen gebildet ist.

Die nach Vollzug des zweiten Teilhubes T2 aus dem zweiten Drosselspalt D2 (**Figuren 4** und **4a**) im Zuge der Sitzreinigung des zweiten Schließgliedes 4 austretende zweite Sitzreinigungsströmung R2 strömt zunächst senkrecht an der zweiten Sitzfläche 2a entlang, folgt dem Verlauf des ersten Endabschnitts 2g ohne abzulösen und tritt stoßfrei in die Umlenkfläche 5b, die von der zweiten Ausnehmung 5c gebildet wird, ein, wird dort entsprechend der Kontur K umgelenkt, verlässt den letzten Abschnitt der Kontur K mit dem gegen die erste Sitzfläche 5e gemessenen dritten Umlenkwinkel β (**Figur 1b**), legt sich weitgehend tangential an eine entsprechend angeschrägte Stirnfläche 3b des ersten Endabschnitts 3** an (**Figur 1b**) und gelangt schließlich in den Bereich der Ablaufbohrung 4d.

Es ist durchaus möglich, den ersten Abschnitt der an der zweiten Umlaufkante U2 beginnenden Kontur K nicht mit dem ersten Endabschnitt 2g fluchten zu lassen. Eine Anstellung des ersten Abschnitts um einen zweiten Umlenkwinkel ∈ ist möglich (**Figur 1b**), wenn letzterer unterhalb von 15 Grad bleibt. Ansonsten kommt es im Bereich der zweiten Umlaufkante U2 zur Staudruckbildung. Bei einer Anstellung in der anderen Richtung kommt es bei Überschreitung des genannten Winkelwertes zur Ablösung.

Falls der erste Endabschnitt 2g nicht als Einfahrschräge ausgebildet ist, sondern dem Verlauf der zweiten Sitzfläche 2a folgt und bis zu seinem Ende zylindrisch ausgeführt ist (**Figur 1b**), kann der erste Abschnitt der Kontur K der Umlenkfläche 5b wiederum fluchtend zum ersten Endabschnitt 2g ausgeführt sein oder der erste Abschnitt kann auch um den besagten zweiten Umlenkwinkel ∈ < 15 Grad gegen den ersten Endabschnitt 2g geneigt sein.

Ein zweiter Endabschnitt 5** des zylindrischen dritten Ansatzes 5* des Schieberteils 5 (**Figur 1b**) weist stirnseitig und radial außenseits im Anschluss an die Anschlagfläche 5d eine ringförmig umlaufende Anschrägung 5h auf, die gegen die Anschlagfläche 5d unter einem Anschrägungswinkel λ verläuft. Der von der Anschrägung 5h und der Mantelfläche des dritten Ansatzes 5* am dritten Durchmesser d3 gebildete umlaufende Durchdringungsbereich ist in Form einer abgerundeten dritten Umlaufkante U3 ausgebildet. Der Anschrägungswinkel λ ist derart bemessen, dass die dritte Umlaufkante U3, in radialer Richtung gesehen, so weit wie möglich nach außen verlagert und so nah wie zulässig an den durch den Ausrundungsradius r1 bestimmten Verlauf der Übergangsfläche 2e herangeführt ist und dort mit letzterer eine ringförmig umlaufende Zentrierstelle Z bildet. Dadurch ist der Schieberteil 5 kurz vor dem Einfahren in seine Anschlagposition in jedem Falle derart hinreichend koaxial zentriert, dass die erste und die zweite Umlaufkante U1, U2 in der notwendigen Weise miteinander korrespondieren, auch wenn ein unplanmäßiges Verkanten des Schieberteils 5 aufgrund mangelhafter Führung an den hierfür planmäßig vorgesehenen Führungsstellen einmal auftreten sollte.

Das leckageraumseitige Ende des in **Figur 5a** bezeichneten dritten Drosselspaltes D3 ist durch die vorstehend beschriebene Anschlagposition (s. **Figuren 1b** und **4a**) des Schieberteils 5 an der ventilgehäuseseitigen Anschlagfläche 2e* weitestgehend dicht verschlossen (so weit dies bei einer Anlage Metall gegen Metall oder fest gegen fest grundsätzlich möglich ist). Reinigungsflüssigkeit der zweiten Sitzreinigungsströmung R2 (**Figur 4a**) kann nicht mehr in den dritten Drosselspalt D3 und damit in den Bereich der dritten Dichtung 8 eintreten. Selbst bei ggf. stark beschädigter oder ggf. gänzlich entfernter dritter Dichtung 8 ist daher kein Durchtritt für Reinigungsflüssigkeit mehr gegeben.

Gemäß den **Figuren 5** und **5a** nimmt das Doppelsitzventil 1 nach Vollzug des nach oben gerichteten ersten Teilhubes T1 durch den Schieberteil 5 seine erste Sitzreinigungsstellung ein. Es werden einerseits zwischen dem Schieberteil 5 (erste Sitzfläche 5e) und dem ersten Schließglied 3 (zylindrischer erster Ansatz 3*) der erste Drosselspalt D1 und andererseits zwischen dem Schieberteil 5 (zylindrischer dritter Ansatz 5*) und der dritten Sitzfläche 2b der dritte Drosselspalt D3 gebildet. Die erste Dichtung 6 und die dritte Dichtung 8 sind dabei jeweils spaltweit von ihrer zugeordneten Sitzfläche 5e bzw. 2b entfernt. Durch den ersten Drosselspalt D1 tritt die erste Sitzreinigungsströmung R1 hindurch, strömt tangential an der ersten Dichtung 6 vorbei und gelangt in den Leckagehohlraum 9 und von dort auf dem Weg über die Ausnehmung 4f in die Ablaufbohrung 4d.

Aus **Figur 1a** wird weiterhin deutlich, dass auch die dritte Sitzfläche 2b eine dichtungsschonende Einfahrschräge 2h für die dritte Dichtung 8, wenn der Schieberteil 5 aus seiner Sitzreinigungsstellung in seine Schließstellung zurückkehrt, aufweist. Die dritte Sitzreinigungsströmung R3 verlässt den dritten Drosselspalt D3 (**Figur 5a**) zunächst entlang der ringförmigen ersten Ausnehmung 2d und damit auch der dritten Sitzfläche 2b und wird über die Übergangsfläche 2e zum Zentrum des Leckagehohlraumes 9 hin umgelenkt. Ein unmittelbares und direktes Bespritzen des Sitzbereichs der zweiten Dichtung 7 wird dadurch sicher verhindert. Das zweite Schließglied 4 ist in der Sitzreinigungsstellung des Schieberteils 5 axial derart positioniert, dass die dritte Sitzreinigungsströmung R3 unbehindert über das zweite Schließglied 4 hinweg strömen und in die Ablaufbohrung 4d gelangen kann. Durch diese Strömungsführung und Positionierung des zweiten Schließgliedes 4 wird sogar ein Besaugen des Sitzbereichs der zweiten Dichtung 7 erreicht, so dass selbst bei Verlust oder signifikanter Beschädigung der zweiten Dichtung 7 kein Reinigungsmittel in das benachbarte zweite Ventilgehäuseteil 1b eintreten kann.

Abhängig von den gegebenen Druckverhältnissen und unter dem Einfluss der Schwerkraft bei Anordnung des Doppelsitzventils 1 gemäß Zeichnungslage nimmt der Flüssigkeitsstrahl der dritten Sitzreinigungsströmung R3 einen leicht parabelförmigen Verlauf mit radialer Strömungskomponente nach innen, wobei sich die erste Sitzreinigungsströmung R1 von oben auf die dritte Sitzreinigungsströmung R3 quasi aufschichtet und damit gleichfalls eine radiale Strömungskomponente nach innen erhält. Dadurch wird eine Direktbeaufschlagung der zweiten Sitzfläche 2a und der ihr zugeordneten zweiten Dichtung 7 in der Schließstellung des zweiten Schließgliedes 4 auch durch die erste Sitzreinigungsströmung R1 sicher vermieden.

In **Figur 1** ist das einstückige Anschweißteil 40 dargestellt, das aus dem Verstellstangenabschnitt 4a*, den drei Traversen 4e und dem Ring 4g gebildet ist. Die beispielsweise drei über den Umfang des Verstellstangenabschnitts 4a* gleichmäßig verteilt angeordneten Traversen 4e sind fest mit diesem verbunden. Sie sind jeweils radial außenseits gleichfalls fest mit dem umlaufenden Ring 4g verbunden. Der Anschweißteil 40 ist außenseits über den Ring 4g an den den leckagehohlraumfemen Abschnitt der Ablaufbohrung 4d begrenzenden zweiten Druckausgleichskolben 4c und innenseits über den Verstellstangenabschnitt 4a* an die erste Verstellstange 4a angeschweißt. Dabei ist der Ring 4g in seinem Innendurchmesser derart gegenüber dem Durchmesser der Ablaufbohrung 4d unter Zwischenschaltung eines konisch sich erweiternden Übergangsbereichs vergrößert, dass der Innendurchgang der Ablaufbohrung 4d durch die Traversen 4e nicht geschmälert ist.

Das erfindungsgemäße Doppelsitzventil 1 verfügt über einen Antrieb 11, der oberhalb des ersten Ventilgehäuseteils 1a angeordnet ist und mit letzterem mittels einer nicht bezeichneten Laterne verbunden ist. Dieser Antrieb 11, der nicht Gegenstand der vorliegenden Erfindung ist, erfüllt sämtliche Erfordernisse der vorstehend beschriebenen Bewegungskinematik der Schließglieder 3, 4 und des Schieberteils 5 zur Durchführung der Öffnungs- und Schließbewegung sowie der beiden Sitzreinigungsbewegungen des Doppelsitzventils 1. Hierzu dienen die bereits vorstehend erwähnte erste Verstellstange 3a für das erste Schließglied 3, die zweite Verstellstange 4a für das zweite Schließglied 4 sowie eine dritte Verstellstange 5g für den Schieberteil 5 (**Figur 1**).

Ein Vorschlag sieht vor, dass der Schieberteil 5 über fluiddurchlässige Verbindungsstege 5a mit einem topfförmigen, zum Schieberteil 5 hin offenen Aufnahmezylinder 5f verbunden ist, der das zugeordnete erste Ventilgehäuseteil 1a verschieblich und über eine zweite Gehäusedichtung 13 abgedichtet durchdringt und sich an seinem dem Schieberteil 5 abgewandten Ende in die als Hohlstange ausgeführten dritten Verstellstange 5g fortsetzt, die in den Antrieb 11 hineingeführt ist.

Ausgehend von der vorstehenden Anordnung sieht ein anderer Vorschlag vor, dass die mit dem ersten Schließglied 3 verbundene, als Hohlstange ausgeführte und gleichfalls in den Antrieb 11 hineingeführte erste Verstellstange 3a den Aufnahmezylinder 5f verschieblich, konzentrisch durchdringt, an ihrer Eintrittsstelle in den Aufnahmezylinder 5f gegen diesen über eine Zylinderdichtung 14 abgedichtet ist und im Eingriffsbereich mit dem Aufnahmezylinder 5f als ein erster Druckausgleichskolben 3a* ausgebildet ist, dessen Außendurchmesser im Grenzfall bis an den Außendurchmesser des ersten Schließgliedes 3 heranreicht.

Die mit dem zweiten Schließglied 4 verbundene zweite Verstellstange 4a durchdringt die als Hohlstange ausgeführte erste Verstellstange 3a konzentrisch und ist in den Antrieb 11 hineingeführt. An dem dem Antrieb 11 gegenüberliegenden Ende der zweiten Verstellstange 4a ist letztere vorzugsweise über das Anschweißteil 40 mit dem am zweiten Schließglied 4 angeformten rohrförmigen Schaft 4b/4c verbunden. Letzterer ist in seinem das zugeordnete zweite Ventilgehäuseteil 1b über eine erste Gehäusedichtung 12 dichtend durchdringenden Bereich in Form des zweiten Druckausgleichskolbens 4c ausgebildet, dessen Außendurchmesser im Grenzfall bis an den Außendurchmesser des zweiten Schließgliedes 4 heranreicht. Dabei kann aufgrund der Merkmale des erfindungsgemäßen Doppelsitzventils 1 die den zweiten Druckausgleichskolben 4c durchdringende Ablaufbohrung 4d so bemessen werden, dass ihr Durchtrittsquerschnitt dem Durchtrittsquerschnitt der größten an die Ventilgehäuseteile 1a, 1 b angeschlossenen Rohrleitung gleich ist.

Eine grundlegende zweite Ausführungsform des Doppelsitzventils 1 gemäß der Erfindung zeichnet sich dadurch aus, dass an Stelle des axial verschieblichen, zylindrischen ringförmigen Schieberteils 5 nunmehr ein ortsfester zylindrischer zweiter Sitzring 50 tritt (**Figur 1**). Die diesbezügliche Ausführungsform wird in Figur 1 nicht dargestellt, sondern es werden nur die Bezugszeichen der beiden modifizierten Bauteile 50, 50a an den in Frage kommenden Stellen angegeben. Der zweite Sitzring 50 stützt sich unverschieblich über wenigstens einen modifizierten Verbindungssteg 50a in dem ersten Ventilgehäuseteil 1a ab, und zwar auf dessen dem zweiten Sitzring 2 gegenüber liegenden Seite. Ein diesbezüglich abgestützter Sitzring ist an sich beispielsweise aus der EP 0 646 741 A1 bekannt. Da der zweite Sitzring 50 axial unverschieblich ist, erfolgt die Sitzreinigung des ersten Schließgliedes 3 nunmehr derart, dass das erste Schließglied 3 durch einen der Öffnungsbewegung entgegengerichteten ersten Teilhub T1 in seine Sitzreinigungsstellung überführbar ist. Die diesbezügliche erste Sitzreinigung generiert nunmehr nur noch über einen am ersten Schließglied 3 alleinigen ersten Drosselspalt D1 eine erste Sitzreinigungsströmung R1. Letztere wird über den ersten Drosselspalt D1 definiert bemessen, der zwischen einem leckageraumseitig am ersten Schließglied 3 angeordneten zylindrischen ersten Ansatz 3** (entspricht dem ersten Endabschnitt 3** bei der Ausführung mit Schieberteil 5) und der zugeordneten ersten Sitzfläche 5e gebildet wird.

In einem nicht dargestellten und bezeichneten Steuerkopf, der auf der dem Doppelsitzventil 1 abgewandten Seite des Antriebs 11 angeordnet ist, sind bei der ersten Ausführungsform des Doppelsitzventils 1 ein erster und ein zweiter Stellungsmelder 15.1, 15.2 für das Detektieren der Schließ- und der Offenstellung sowie ein dritter Stellungsmelder 15.3, mit dem der zweite Teilhub T2 des zweiten Schließgliedes 4 detektiert wird, angeordnet. Die Stellung des Schieberteils 5 wird über einen vierten Stellungsmelder 15.4 erfasst, der den mit dem Schieberteil 5 verbundenen, aus dem ersten Ventilgehäuseteil 1 a herausgeführten und zwischen dem ersten Ventilgehäuseteil 1a und dem Antrieb 11 angeordneten Aufnahmezylinder 5f detektiert. Bei der zweiten Ausführungsform des Doppelsitzventils 1 entfällt die Detektierung des Schieberteils 5 und es wird zur Erfassung des ersten Teilhubs T1 der ersten Sitzreinigungsstellung ein mit der ersten Ventilstange 3a zusammenwirkender fünfter Stellungsmelder 15.5 im Steuerkopf vorgesehen.

Aus dem oben Genannten wird verständlich, dass verschiedene Modifikationen und Varianten realisiert werden können, ohne vom Geist und dem neuen Konzept der vorliegenden Erfindung abzuweichen. Dies ist so zu verstehen, dass keine Beschränkung auf eine der beiden grundlegenden Ausführungsformen beabsichtigt ist, welche hier dargestellt und beschrieben oder nur beschrieben worden sind. Die Offenbarung soll alle solchen Modifikationen umfassen, die sich innerhalb des von den Ansprüchen beanspruchten Schutzumfangs befinden.

### BEZUGSZEICHENLISTE

- 1: Doppelsitzventil
- 10: Ventilgehäuse
- 1 a: erster Ventilgehäuseteil
- 1 b: zweiter Ventilgehäuseteil

- 2: erster Sitzring
- 2a: zweite Sitzfläche (zylindrische Sitzfläche)
- 2b: dritte Sitzfläche (zylindrische Sitzfläche)
- 2c: Verbindungsöffnung
- 2d: ringförmige erste Ausnehmung
- 2e: Übergangsfläche
- 2e*: ventilgehäuseseitige Anschlagfläche
- 2g: erster Endabschnitt (erste Einfahrschräge)
- 2h: zweite Einfahrschräge

- 3: erstes Schließglied (erster Schieberkolben)
- 3*: zylindrischer erster Ansatz
- 3**: erster Endabschnitt (wird zum zylindrischen ersten Ansatz der zweiten Ausführungsform)
- 3a: erste Verstellstange
- 3a*: erster Druckausgleichskolben
- 3b: Stirnfläche

- 4: zweites Schließglied (zweiter Schieberkolben)
- 4*: zylindrischer zweiter Ansatz
- 4a: zweite Verstellstange
- 4b/4c: rohrförmiger Schaft
- 4b: Verbindungsteil
- 4c: zweiter Druckausgleichskolben
- 4d: Ablaufbohrung
- 4f: Ausnehmung
- 4h: (zylindrische) Umfangswand

- 40: Anschweißteil
- 4a*: Verstellstangenabschnitt
- 4e: Traverse
- 4g: Ring

- 5: ringförmiger Schieberteil
- 5*: zylindrischer dritter Ansatz
- 5**: zweiter Endabschnitt
- 5a: Verbindungssteg
- 5b: Umlenkfläche
- 5c: ringförmige zweite Ausnehmung
- 5d: Anschlagfläche (schieberseitig)
- 5e: erste Sitzfläche (zylindrische Sitzfläche)
- 5f: Aufnahmezylinder
- 5g: dritte Verstellstange
- 5h: Anschrägung
- 5i: Durchgangsbohrung

- 50: zweiter Sitzring
- 50a: modifizierter Verbindungssteg

- 6: erste Dichtung (radial)
- 7: zweite Dichtung (radial)
- 8: dritte Dichtung (radial, im Schieberteil 5)
- 9: Leckagehohlraum
- 10: (Ventilgehäuse)
- 11: Antrieb
- 12: erste Gehäusedichtung
- 13: zweite Gehäusedichtung
- 14: Zylinderdichtung

- 15.1: erster Stellungsmelder
- 15.2: zweiter Stellungsmelder
- 15.3: dritter Stellungsmelder
- 15.4: vierter Stellungsmelder
- 15.5: fünfter Stellungsmelder

- a: radiale Breite der Übergangsfläche 2e
- b: Breite (schieberteilseitige Anschlagfläche am zweiten Endabschnitt 5**)

- d1: erster Durchmesser (erstes Schließglied 3)
- d2: zweiter Durchmesser (zweites Schließglied 4)
- d3: dritter Durchmesser (Schieberteil 5)

- h: Abholhub

- r1: Ausrundungsradius (der Übergangsfläche 2e)
- r2: erste Eckenabrundung (ventilgehäuseseitige Anschlagfläche 2e* mit erstem Endabschnitt 2g)
- r3: zweite Eckenabrundung (Anschlagfläche 5d mit erstem Abschnitt der Umlenkfläche 5b)
- r4: dritte Eckenabrundung (Umlenkfläche 5b mit erster Sitzfläche 5e)

- x: axialer Sicherheitsabstand

- α: erster Umlenkwinkel (an der Übergangsfläche 2e)
- β: dritter Umlenkwinkel (Austritt der Umlenkfläche 5b mit der ersten Sitzfläche 5e)
- δ: Anstellwinkel (des ersten Endabschnitts 2g)
- ∈: zweiter Umlenkwinkel (zwischen erstem Endabschnitt 2g und erstem Abschnitt der Umlenkfläche 5b)
- λ: Anschrägungswinkel (zwischen Anschlagfläche 5d und Anschrägung 5h)

- D1: erster Drosselspalt (am ersten Schießglied 3)
- D2: zweiter Drosselspalt (am zweiten Schließglied 4)
- D3: dritter Drosselspalt (am Schieberteil 5)

- H: voller Öffnungshub (volle Offenstellung)
- K: Kontur der Umlenkfläche 5b

- R1: erste Sitzreinigungsströmung (am ersten Schließglied 3)
- R2: zweite Sitzreinigungsströmung (am zweiten Schließglied 4)
- R3: dritte Sitzreinigungsströmung (am Schieberteil 5)

- T1: erster Teilhub (erste Teiloffenstellung/erste Sitzreinigungsstellung)
- T2: zweiter Teilhub (zweite Teiloffenstellung/zweite Sitzreinigungsstellung)

- U1: erste Umlaufkante (ventilgehäuseseitige Anschlagfläche 2e* mit erstem Endabschnitt 2g)
- U2: zweite Umlaufkante (Anschlagfläche 5d mit erstem Abschnitt der Umlenkfläche 5b)
- U3: dritte Umlaufkante (zwischen Anschrägung 5h und drittem Durchmesser d3)

- Z: Zentrierstelle

## Patentansprüche

1. Doppelsitzventil mit zwei seriell angeordneten, relativ zueinander bewegbaren, als Schieberkolben ausgebildeten Schließgliedern (3, 4), die in der Schließstellung des Doppelsitzventils (1) das Überströmen von Fluiden von einem Ventilgehäuseteil (1 a; 1 b) in ein anderes (1b; 1 a) durch eine die Ventilgehäuseteile (1a, 1b) miteinander verbindende Verbindungsöffnung (2c) verhindern und die sowohl in der Schließ- als auch in der Offenstellung des Doppelsitzventils (1) einen Leckagehohlraum (9) begrenzen, der mit der Umgebung des Doppelsitzventils (1) über einen am zweiten Schließglied (4) angeformten rohrförmigen Schaft (4b/4c), in dem eine Ablaufbohrung (4d) angeordnet ist, verbunden ist, **dadurch gekennzeichnet, dass** ein axial verschieblicher, zylindrischer ringförmiger Schieberteil (5) vorgesehen ist, der sowohl in der Schließ- als auch in der Offenstellung des Doppelsitzventils (1) radial außenseits in einer in der Verbindungsöffnung (2c) ausgebildeten zylindrischen dritten Sitzfläche (2b) dichtend Aufnahme findet und radial innenseits in einer mit der Verbindungsöffnung (2c) fluiddurchlässig verbundenen Durchgangsbohrung (5i) eine zylindrische erste Sitzfläche (5e) ausbildet, die koaxial zur Verbindungsöffnung (2c) verläuft, wobei in der Schließstellung das erste Schließglied (3) in der ersten Sitzfläche (5e) dichtend Aufnahme findet und im Zuge seiner öffnungsbewegung am zweiten Schließglied (4), das einer in der Verbindungsöffnung (2c) ausgeführten zylindrischen zweiten Sitzfläche (2a) zugeordnet ist, dichtend zur Anlage kommt und letzteres bei der weiteren Offnungsbewegung gleichfalls in eine Offenstellung (H) überführt wird, wobei das erste Schließglied (3) an einem ersten Endabschnitt (3**) eine erste Dichtung (6) aufweist, die radial in der ersten Sitzfläche (5e) abdichtet, wobei das zweite Schließglied (4) an seinem dem ersten Schließglied (3) zugewandten Ende eine Ausnehmung (4f) mit einer im Wesentlichen zylindrischen, mit der ersten Sitzfläche (5e) fluchtenden Umfangswand (4h) besitzt und die Ausnehmung (4f) so dimensioniert ist, um während der Öffnungsbewegung den ersten Endabschnitt (3**) und die radiale erste Dichtung (6) des ersten Schließgliedes (3) dichtend aufzunehmen, bevor das zweite Schließglied (4) öffnet, mit jeweils einer Sitzreinigungsstellung für die Schließglieder (3, 4) und den Schieberteil (5) zwecks Spülung ihrer koaxialen Sitzflächen (5e, 2a, 2b), wobei das zweite Schließglied (4) durch einen der Öffnungsbewegung gleichgerichteten zweiten Teilhub (T2) und der Schieberteil (5) durch einen der Öffnungsbewegung entgegengerichteten ersten Teilhub (T1) in seine jeweilige Sitzreinigungsstellung überführbar sind, wobei die zweite Sitzfläche (2a) einen Durchmesser aufweist, der kleiner ist als der Durchmesser der dem Schieberteil (5) zugeordneten dritten Sitzfläche (2b), wobei eine Übergangsfläche (2e) zwischen der zweiten und der dritten Sitzfläche (2a, 2b) vorgesehen ist und wobei in der dem Leckagehohlraum (9) zugewandten Stirnseite des Schieberteils (5) eine ringförmige zweite Ausnehmung (5c) in Form einer Umlenkfläche (5b) angeordnet ist.

2. Doppelsitzventil nach Anspruch 1,
**dadurch gekennzeichnet,**
**dass** am ersten Schließglied (3) leckageraumabgewandt ein zylindrischer erster Ansatz (3*), angeordnet ist, der nach Vollzug des ersten Teilhubs (T1) mit der zugeordneten ersten Sitzfläche (5e) einen ringförmigen ersten Drosselspalt (D1) bildet.

3. Doppelsitzventil nach Anspruch 1 oder 2,
**dadurch gekennzeichnet,**
**dass** am Schieberteil (5) leckageraumseitig ein zylindrischer dritter Ansatz (5*) angeordnet ist, der nach Vollzug des ersten Teilhubs (T1) mit der zugeordneten dritten Sitzfläche (2b) einen ringförmigen dritten Drosselspalt (D3) bildet.

4. Doppelsitzventil nach einem der Ansprüche 1 bis 3,
**dadurch gekennzeichnet,**
**dass** am zweiten Schließglied (4) leckageraumseitig ein zylindrischer zweiter Ansatz (4*) vorgesehen ist, der nach Vollzug des zweiten Teilhubs (T2) mit der zugeordneten zweiten Sitzfläche (2a) einen ringförmigen zweiten Drosselspalt (D2) bildet.

5. Doppelsitzventil nach einem der Ansprüche 1 bis 4,
**dadurch gekennzeichnet,**
**dass**, zeitlich gesehen, unmittelbar vor der Öffnungsbewegung des ersten Schließgliedes (3) das zweite Schließglied (4) durch einen der Offnungsbewegung entgegengerichteten Abholhub (h) mit seiner Stirnfläche an den Schieberteil (5) herangeführt wird und dort, unmittelbar an die erste Sitzfläche (5e) angrenzend, zur Anlage kommt.

6. Doppelsitzventil nach einem der Ansprüche 1 bis 5,
**dadurch gekennzeichnet,**
**dass** der rohrförmige Schaft (4b/4c) in seinem das zugeordnete zweite Ventilgehäuseteil (1 b) durchdringenden Bereich als zweiter Druckausgleichskolben (4c) ausgebildet ist, dessen Außendurchmesser im Grenzfall bis an den Außendurchmesser des zweiten Schließgliedes (4) heranreicht.

7. Doppelsitzventil nach einem der Ansprüche 1 bis 6,
**dadurch gekennzeichnet,**
**dass** der Durchtrittsquerschnitt der Ablaufbohrung (4d) dem Durchtrittsquerschnitt der größten an die Ventilgehäuseteile (1a, 1b) angeschlossenen Rohrleitung gleich ist.

8. Doppelsitzventil nach einem der Ansprüche 1 bis 7,
**dadurch gekennzeichnet,**
**dass** der Schieberteil (5) über fluiddurchlässige Verbindungsstege (5a) mit einem topfförmigen, zum Schieberteil (5) hin offenen Aufnahmezylinder (5f) verbunden ist, der das zugeordnete erste Ventilgehäuseteil (1a) verschieblich und abgedichtet durchdringt und sich an seinem dem Schieberteil (5) abgewandten Ende in einer als Hohlstange ausgeführten dritten Verstellstange (5g) fortsetzt, die in einen Antrieb (11) hineingeführt ist.

9. Doppelsitzventil nach Anspruch 8,
**dadurch gekennzeichnet,**
**dass** eine mit dem ersten Schließglied (3) verbundene, als Hohlstange ausgeführte und in den Antrieb (11) hineingeführte erste Verstellstange (3a) den Aufnahmezylinder (5f) verschieblich, konzentrisch durchdringt, an ihrer Eintrittsstelle in den Aufnahmezylinder (5f) gegen diesen abgedichtet ist und im Eingriffsbereich mit dem Aufnahmezylinder (5f) als ein erster Druckausgleichskolben (3a*) ausgebildet ist, dessen Außendurchmesser im Grenzfall bis an den Außendurchmesser des ersten Schließgliedes (3) heranreicht.

10. Doppelsitzventil nach Anspruch 9,
**dadurch gekennzeichnet,**
**dass** eine mit dem zweiten Schließglied (4) verbundene zweite Verstellstange (4a) die als Hohlstange ausgeführte erste Verstellstange (3a) konzentrisch durchdringt und in den Antrieb (11) hineingeführt ist.

11. Doppelsitzventil nach einem der Ansprüche 1 bis 10,
**dadurch gekennzeichnet,**
**dass** der Schieberteil (5) in seiner Schließstellung mit einer an seiner Stirnseite angeordneten Anschlagfläche (5d) an der Übergangsfläche (2e) anliegt, und zwar unmittelbar an die zweite Sitzfläche (2g; 2a) angrenzend, dass im weiteren Verlauf der Stirnseite des dritten Ansatzes (5*) die ringförmige zweite Ausnehmung (5c) vorgesehen ist, deren Kontur (K), im Meridianschnitt gesehen, einen knickfreien Verlauf aufweist, radial außenseits mit einem ersten Abschnitt der rotationssymmetrischen Umlenkfläche (5b) beginnt und radial innenseits mit einem letzten Abschnitt unter einem spitzen dritten Umlenkwinkel (β) in die zylindrische Mantelebene der ersten Sitzfläche (5e) ausmündet, dass die Umlenkfläche (5b) und die Anschlagfläche (5d) eine zweite Umlaufkante (U2) ausbilden, die in der Schließstellung des Schieberteils (5) unmittelbar an einen ersten Endabschnitt (2g) der zweiten Sitzfläche (2a) angrenzt, dass, im Meridianschnitt gesehen, ein Richtungsvektor im Ausmündungspunkt der Umlenkfläche (5b) in die zentrisch im zweiten Schließglied (4) angeordnete Ablaufbohrung (4d) weist, ohne mit dem ersten oder dem zweiten Schließglied (3, 4) im Bereich deren den Leckagehohlraum (9) berandenden Bereiche staudruckbildend zu kollidieren, und dass eine dem Leckagehohlraum (9) zugewandte stirnseitige Begrenzung des zweiten Schließgliedes (4) einen axialen Sicherheitsabstand (x) vom Richtungsvektor an einer als eine erste Umlaufkante (U1) ausgebildeten Austrittsstelle der Übergangsfläche (2e) in den ersten Endabschnitt (2g) besitzt.

12. Doppelsitzventil nach Anspruch 11 ,
**dadurch gekennzeichnet,**
**dass** ein Richtungsvektor am Anfangspunkt der Kontur (K) mit dem ersten Endabschnitt (2g) fluchtet.

13. Doppelsitzventil nach einem der Ansprüche 11 oder 12,
**dadurch gekennzeichnet,**
**dass** die von der Übergangsfläche (2e) und dem ersten Endabschnitt (2g) gebildete erste Umlaufkante (U1) mit einer kleinstmöglichen ersten Eckenabrundung (r2) abgerundet ist.

14. Doppelsitzventil nach einem der Ansprüche 11 bis 13,
**dadurch gekennzeichnet,**
**dass** die zweite Umlaufkante (U2) mit einer kleinstmöglichen zweiten Eckenabrundung (r3) abgerundet ist.

15. Doppelsitzventil nach einem der Ansprüche 10 bis 14,
**dadurch gekennzeichnet,**
**dass** sich die zweite Verstellstange (4a) fliegend durch die Ablaufbohrung (4d) hindurch fortsetzt und an einem dem ersten Schließglied (3) abgewandten Ende des zweiten Schließgliedes (4) mit letzterem über wenigstens eine im Wesentlichen radial orientierte Traverse (4e) fest verbunden ist.

16. Doppelsitzventil nach einem der Ansprüche 11 bis 15,
**dadurch gekennzeichnet,**
**dass** ein zweiter Endabschnitt (5**) des Schieberteils (5) radial außenseits im Anschluss an die Anschlagfläche (5d) eine ringförmig umlaufende Anschrägung (5h) aufweist, die gegen die Anschlagfläche (5d) unter einem Anschrägungswinkel (λ) verläuft, der derart bemessen ist, dass eine zwischen der Anschrägung (5h) und einem dritten Durchmesser (d3) des Schieberteils (5) durch Abrundung gebildete dritte Umlaufkante (U3), in radialer Richtung gesehen, so weit wie möglich nach außen verlagert und so nah wie zulässig an den durch den Ausrundungsradius (r1) bestimmten Verlauf der Übergangsfläche (2e) herangeführt ist und dort eine ringförmig umlaufende Zentrierstelle (Z) bildet.

17. Doppelsitzventil nach einem der Ansprüche 1 bis 16,
**dadurch gekennzeichnet,**
**dass** die Schließ- und die Offenstellung der Schließglieder (3, 4) über letztere betätigende Verstellstangen (3a, 4a) mittels eines ersten bzw. eines zweiten Stellungsmelders (15.1; 15.2) detektiert werden, die in einem auf der dem Doppelsitzventil (1) abgewandten Seite eines Antriebs (11) in einem Steuerkopf angeordnet sind.

18. Doppelsitzventil nach Anspruch 17,
**dadurch gekennzeichnet,**
**dass** der zweite Teilhub (T2) des zweiten Schließgliedes (4) über die zweite Verstellstange (4a) mittels eines dritten Stellungsmelders (15.3) detektiert wird, der in dem Steuerkopf angeordnet ist.

19. Doppelsitzventil nach Anspruch 17 oder 18,
**dadurch gekennzeichnet,**
**dass** der erste Teilhub (T1) des Schieberteils (5) über einen vierten Stellungsmelder (15.4) erfasst wird, der den mit dem Schieberteil (5) verbundenen, aus dem ersten Ventilgehäuseteil (1a) herausgeführten Aufnahmezylinder (5f) detektiert und der zwischen dem ersten Ventilgehäuseteil (1 a) und dem Antrieb (11) angeordnet ist.

20. Doppelsitzventil mit zwei seriell angeordneten, relativ zueinander bewegbaren, als Schieberkolben ausgebildeten Schließgliedern (3, 4), die in der Schließstellung des Doppelsitzventils (1) das Überströmen von Fluiden von einem Ventilgehäuseteil (1a; 1 b) in ein anderes (1b; 1 a) durch eine die Ventilgehäuseteile (1a, 1b) miteinander verbindende Verbindungsöffnung (2c) verhindern und die sowohl in der Schließ- als auch in der Offenstellung des Doppelsitzventils (1) einen Leckagehohlraum (9) begrenzen, der mit der Umgebung des Doppelsitzventils (1) über einen am zweiten Schließglied (4) angeformten rohrförmigen Schaft (4b/4c), in dem eine Ablaufbohrung (4d) angeordnet ist, verbunden ist, wobei ein ortsfester, zylindrischer ringförmiger zweiter Sitzring (50) vorgesehen ist, der radial außenseits in einer in der Verbindungsöffnung (2c) ausgebildeten zylindrischen dritten Sitzfläche (2b) dichtend Aufnahme findet, der radial innenseits in einer mit der Verbindungsöffnung (2c) fluiddurchlässig verbundenen Durchgangsbohrung (5i) eine zylindrische erste Sitzfläche (5e) ausbildet, die koaxial zur Verbindungsöffnung (2c) verläuft und mit letzterer fluiddurchlässig verbunden ist und der sich über wenigstens einen ortsfesten Verbindungssteg (50a) in dem ersten Ventilgehäuseteil (1a), auf dessen dem zweiten Sitzring (50) gegenüberliegenden Seite, unverschieblich abstützt, wobei in der Schließstellung das erste Schließglied (3) in der ersten Sitzfläche (5e) dichtend Aufnahme findet und im Zuge seiner Öffnungsbewegung am zweiten Schließglied (4), das einer in der Verbindungsöffnung (2c) ausgeführten zylindrischen zweiten Sitzfläche (2a) zugeordnet ist, dichtend zur Anlage kommt und letzteres bei der weiteren Öffnungsbewegung gleichfalls in eine Offenstellung (H) überführt wird, wobei das erste Schließglied (3) an einem ersten Endabschnitt (3**) eine erste Dichtung (6) aufweist, die radial in der ersten Sitzfläche (5e) abdichtet, wobei das zweite Schließglied (4) an seinem dem ersten Schließglied (3) zugewandten Ende eine Ausnehmung (4f) mit einer im wesentlichen zylindrischen, mit der ersten Sitzfläche (5e) fluchtenden Umfangswand (4h) besitzt und die Ausnehmung (4f) so dimensioniert ist, um während der Öffnungsbewegung den ersten Endabschnitt (3**) und die radiale erste Dichtung (6) des ersten Schließgliedes (3) dichtend aufzunehmen, bevor das zweite Schließglied (4) öffnet, mit Schließgliedern (3, 4), die unabhängig voneinander durch einen Teilhub jeweils spaltweit in eine Sitzreinigungsstellung zwecks Spülung ihrer koaxialen Sitzflächen (5e, 2a) überführbar sind, wobei das zweite Schließglied (4) durch einen der Öffnungsbewegung gleichgerichteten zweiten Teilhub (T2) und das erste Schließglied (3) durch einen der Öffnungsbewegung entgegengerichteten ersten Teilhub (T1) in seine jeweilige Sitzreinigungsstellung überführbar sind, **dadurch gekennzeichnet, dass** die zweite Sitzfläche (2a) einen Durchmesser aufweist, der kleiner ist als der Durchmesser der dem zweiten Sitzring (50) zugeordneten dritten Sitzfläche (2b), wobei eine Übergangsfläche (2e) zwischen der zweiten und der dritten Sitzfläche (2a, 2b) vorgesehen ist und wobei in der dem Leckagehohlraum (9) zugewandten Stirnseite des zweiten Sitzringes (50) eine ringförmige Ausnehmung (5c) in Form einer Umlenkfläche (5b) angeordnet ist.

21. Doppelsitzventil nach Anspruch 20,
**dadurch gekennzeichnet,**
**dass** an jedem Schließglied (3, 4) leckageraumseitig ein zylindrischer Ansatz (3**, 4*) angeordneten ist, der mit der zugeordneten Sitzfläche (5e, 2a) einen ringförmigen Drosselspalt (D1, D2) bildet.

22. Doppelsitzventil nach Anspruch 20 oder 21,
**dadurch gekennzeichnet,**
**dass**, zeitlich gesehen, unmittelbar vor der Öffnungsbewegung des ersten Schließgliedes (3) das zweite Schließglied (4) durch einen der Öffnungsbewegung entgegengerichteten Abholhub (h) mit seiner Stirnfläche an den zweiten Sitzring (50) herangeführt wird und dort, unmittelbar an die erste Sitzfläche (5e) angrenzend, zur Anlage kommt.

23. Doppelsitzventil nach einem der Ansprüche 20 bis 22,
**dadurch gekennzeichnet,**
**dass** eine mit dem ersten Schließglied (3) verbundene, als Hohlstange ausgeführte und in einen Antrieb (11) hineingeführte erste Verstellstange (3a) in ihrem das zugeordnete erste Ventilgehäuseteil (1a) durchdringenden Bereich als erster Druckausgleichskolben (3a*) ausgebildet ist, dessen Außendurchmesser im Grenzfall bis an den Außendurchmesser des ersten Schließgliedes (3) heranreicht.

24. Doppelsitzventil nach Anspruch 23,
**dadurch gekennzeichnet,**
**dass** eine mit dem zweiten Schließglied (4) verbundene zweite Verstellstange (4a) die als Hohlstange ausgeführte erste Verstellstange (3a) konzentrisch durchdringt und in den Antrieb (11) hineingeführt ist.

25. Doppelsitzventil nach einem der Ansprüche 20 bis 24,
**dadurch gekennzeichnet,**
**dass** der zweite Sitzring (50) mit einer an seiner Stirnseite angeordneten Anschlagfläche (5d) an der Übergangsfläche (2e) anliegt, und zwar unmittelbar an die zweite Sitzfläche (2g; 2a) angrenzend, dass im weiteren Verlauf der Stirnseite des zweiten Sitzringes (50), die radial nach innen gegenüber der zweiten Sitzfläche (2a) vorspringt, die ringförmige zweite Ausnehmung (5c) vorgesehen ist, deren Kontur (K), im Meridianschnitt gesehen, einen knickfreien Verlauf aufweist und radial außenseits mit der rotationssymmetrischen Umlenkfläche (5b) beginnt und radial innenseits unter einem spitzen dritten Umlenkwinkel (β) in die zylindrische Mantelebene der ersten Sitzfläche (5e) ausmündet , dass die Umlenkfläche (5b) und die Anschlagfläche (5d) eine zweite Umlaufkante (U2) ausbilden, die unmittelbar an einen ersten Endabschnitt (2g) der zweiten Sitzfläche (2a) angrenzt, dass, im Meridianschnitt gesehen, ein Richtungsvektor im Ausmündungspunkt der Umlenkfläche (5b) in die zentrisch im zweiten Schließglied (4) angeordnete Ablaufbohrung (4d) weist, ohne mit dem ersten oder dem zweiten Schließglied (3, 4) im Bereich deren den Leckagehohlraum (9) berandenden Bereiche staudruckbildend zu kollidieren, und dass eine dem Leckagehohlraum (9) zugewandte stirnseitige Begrenzung des zweiten Ansatzes (4*) einen axialen Sicherheitsabstand (x) vom Richtungsvektor an einer als eine erste Umlaufkante (U1) ausgebildeten Austrittsstelle der Übergangsfläche (2e) in den ersten Endabschnitt (2g) besitzt.

26. Doppelsitzventil nach Anspruch 25,
**dadurch gekennzeichnet,**
**dass** ein Richtungsvektor am Anfangspunkt der Kontur (K) mit dem ersten Endabschnitt (2g) fluchtet.

27. Doppelsitzventil nach einem der Ansprüche 25 bis 26,
**dadurch gekennzeichnet,**
**dass** die von der Übergangsfläche (2e) und dem ersten Endabschnitt (2g) gebildete erste Umlaufkante(U1) mit einer kleinstmöglichen Eckenabrundung (r2) abgerundet ist.

28. Doppelsitzventil nach einem der Ansprüche 25 bis 27,
**dadurch gekennzeichnet,**
**dass** die zweite Umlaufkante (U2) mit einer kleinstmöglichen zweiten Eckenabrundung (r3) abgerundet ist.

29. Doppelsitzventil nach einem der Ansprüche 24 bis 28,
**dadurch gekennzeichnet,**
**dass** sich die zweite Verstellstange (4a) fliegend durch die Ablaufbohrung (4d) hindurch fortsetzt und an einem dem ersten Schließglied (3) abgewandten Ende des zweiten Schließgliedes (4) mit letzterem über wenigstens eine im Wesentlichen radial orientierte Traverse (4e) fest verbunden ist.

## Claims

1. A double-seat valve with two serially arranged closing elements (3, 4), moveable relative to each other and designed as slide pistons, which prevent in the closed position of the double-seat valve (1) the overflow of fluids from one valve housing part (1a; 1b) into another (1b; 1a) through a connecting opening (2c) connecting the valve housing parts (1a, 1b) with each other and which border both in the closed and open position of the double seat valve (1) a leakage cavity (9), which is connected with the surroundings of the double-seat valve (1) via a tubular shaft (4b/4c) arranged on a second closing element (4), in which a drainage hole (4d) is arranged, **characterized in that** an axially relocatable, cylindrical annular slide part (5) both in the closed as well as open position of the double-seat valve (1) is received in a sealing manner radially outward in a cylindrical third seat (2b), which is designed in a connecting opening (2c) connecting the valve housing parts together, and forms radially inward in a passage hole (5i) connected in a fluid-penetrable manner with the connecting opening (2c) a cylindrical first seat (5e), which runs coaxially to the connecting opening (2c), wherein in the closed position the first closing element (3) is received in a sealing manner in the first seat (5e), and in the course of its opening movement comes into sealing abutment with a second closing element (4), which is associated with a cylindrical second seat (2a) designed in the connecting opening (2c), and in a further opening movement the latter is also transferred into an open position (H), wherein the first closing element (3) on a first end section (3**) has a first seal (6), which radially seals in the first seat (5e), wherein the second closing element (4) on its end facing the first closing element (3) has a recess (4f) with a mainly cylindrical circumferential wall (4h) that is flush with the first seat (5e) and the recess (4f) is dimensioned to receive in a sealing manner the first end section (3**) and the radial first seal (6) of the first closing element (3) during the opening movement before the larger closing element opens, each with a seat cleaning position for the closing elements (3, 4) and the slide part (5) for the purpose of rinsing their coaxial seats (5e, 2a, 2b), wherein the second closing element (4) through a second partial lift (T2) directed the same as the opening movement and the slide part (5) through an first partial lift (T1) directed opposite the opening movement are transferrable to their respective seat cleaning position, wherein the second seat (2a) has a diameter that is smaller than the diameter of the third seat (2b) associated with the slide part (5), wherein a transition surface (2e) is provided between the second and the third seats (2a, 2b) and wherein an annular, second recess (5c) in the form of a deflection surface (5b) is arranged in the front face of the slide part (5) facing the leakage cavity (9).

2. The double-seat valve according to claim 1,
**characterized in that**
a cylindrical first appendage (3*) is arranged on the first closing element (3) facing away from the leakage cavity, which forms an annular first choke gap (D1) with the associated first seat (5e) after execution of the first partial lift (T1).

3. The double-seat valve according to claim 1 or 2,
**characterized in that**
a cylindrical third appendage (5*) is arranged on the slide part (5) on the leakage cavity side, which form an annular third choke gap (D3) with the associated third seat (2b) after execution of the first partial lift (T1).

4. The double-seat valve according to one of claims 1 through 3,
**characterized in that**
a cylindrical second appendage (4*) is provided on the second closing element (4) on the leakage cavity side, which forms an annular second choke gap (D2) with the associated second seat (2a) after execution of the second partial lift (T2).

5. The double-seat valve according to one of claims 1 through 4,
**characterized in that**
the second closing element (4) is led with its front face to the slide part (5) by a pickup lift (h) directed opposite the opening movement, in terms of time, right before the opening movement of the first closing element (3) and comes to rest directly adjacent to the first seat (5e).

6. The double-seat valve according to one of claims 1 through 5,
**characterized in that**
the tubular shaft (4b/4c) in its area penetrating the associated second valve housing part (1b) is designed as a second pressure compensation piston (4c), the outer diameter of which reaches up to the outer diameter of the second closing element (4) in the borderline case.

7. The double-seat valve according to one of claims 1 through 6,
**characterized in that**
the passage cross-section of the drainage hole (4d) is equal to the passage cross-section of the largest pipeline connected to the valve housing parts (1a, 1b).

8. The double-seat valve according to one of claims 1 through 7,
**characterized in that**
the slide part (5) is connected with a cup-shaped receiving cylinder (5f) open towards the slide part (5) via fluid-penetrable connecting bars (5a), which penetrates the associated first valve housing part (1a) in a relocatable and sealing manner and continues on its end facing away from the slide part (5) in a third displacement rod (5g) executed as a hollow rod, which is inserted into a drive (11).

9. The double-seat valve according to claim 8,
**characterized in that**
a first displacement rod (3a) connected with the first closing element (3), designed as a hollow rod and inserted into the drive (11) penetrates the receiving cylinder (5f) in a relocatable, concentric manner, is sealed against the receiving cylinder (5f) at its inlet point and is designed as a first pressure compensation piston (3a*) in the contact area with the receiving cylinder (5f), the outer diameter of which reached up to the outer diameter of the first closing element (3) in the borderline case.

10. The double-seat valve according to claim 9,
**characterized in that**
a second displacement rod (4a) connected with the second closing element (4) penetrates concentrically the first displacement rod (3a) designed as a hollow rod and is inserted into the drive (11).

11. The double-seat valve according to one of claims 1 to 10,
**characterized in that**
the slide part (5) in its closed position with a stop surface (5d) arranged on its front face abuts against the transition surface (2e), and namely directly adjacent to the second seat (2g; 2a); in the further progression of the front face of the third appendage (5*), the annular second recess (5c) is provided, the contour (K) of which, seen in the meridian section, has a kink-free progression, begins radially outward with a first section of the rotation-symmetrical deflection surface (5b) and opens radially inward with a last section under a sharp third deflection angle (β) into the cylindrical boundary surface of the first seat (5e); the deflection surface (5b) and the stop surface (5d) form a second circumferential edge (U2), which directly borders a first end section (2g) of the second seat (2a) in the closed position of the slide part (5), and a directional vector in the opening point of the deflection surface (5b) points into a drainage hole (4d) that is centrally arranged in the second closing element (4), without colliding with the first or the second closing element (3, 4) in the region of its areas bounding the leakage cavity (9); and a front side boundary of the second closing element (4), facing the leakage cavity (9), has an axial safety distance (x) from the directional vector at an outlet point of the transition surface (2e), formed as a first circumferential edge (U1) into the first end section (2g).

12. The double-seat valve according to claim 11,
**characterized in that**
a directional vector at the starting point of the contour (K) is flush with the first end section (2g).

13. The double-seat valve according to one of claims 11 or 12,
**characterized in that**
the first circumferential edge (U1) formed by the transition surface (2e) and the first end section (2g) is rounded with a smallest possible first edge rounding (r2).

14. The double-seat valve according to one of claims 11 to 13,
**characterized in that**
the second circumferential edge (U2) is rounded with a smallest possible second edge rounding (r3).

15. The double-seat valve according to one of claims 10 to 14,
**characterized in that**
the second displacement rod (4a) continues flying through the leakage hole (4d) and is permanently connected with the latter via at least one mainly radially oriented traverse (4e) on an end of the second closing element (4) facing away from the first closing element (3).

16. The double-seat valve according to one of claims 11 to 15,
**characterized in that**
a second end section (5**) of the slide part (5) has radially outside in the connection to the stop surface (5d) an annular circumferential chamfer (5h), which runs against the stop surface (5d) under a chamfer angle (λ), which is measured such that a third circumferential edge (U3) formed between the chamfer (5h) and a third diameter (d3) of the slide part (5) through rounding, seen in the radial direction, is relocated as far as possible outside and as close as permissible to the progression of the transition surface (2e) determined by the rounding radius (r1) and forms there an annular circumferential centering point (Z).

17. The double-seat valve according to one of claims 1 to 16,
**characterized in that**
the closed and open positions of the closing elements (3, 4) are detected via latter actuating displacement rods (3a, 4a) by means of a first or respectively a second position detector (15.1; 15.2), which are arranged in a side of the drive (11) facing away from the double-seat valve (1) in a control head.

18. The double-seat valve according to claim 17,
**characterized in that**
the second partial lift (T2) of the second closing element (4) is detected via the second displacement rod (4a) by means of a third position detector (15.3), which is arranged in the control head.

19. The double-seat valve according to claim 17 or 18,
**characterized in that**
the first partial lift (T1) of the slide part (5) is captured via a fourth position detector (15.4), which detects the receiving cylinder (5f) connected with the slide part (5) and led out of the first valve housing part (1a) and is arranged between the first valve housing part (1a) and the drive (11).

20. A double-seat valve with two serially arranged closing elements (3, 4), moveable relative to each other and designed as slide pistons, which prevent in the closed position of the double-seat valve (1) the overflow of fluids from one valve housing part (1a; 1b) into another (1b; 1a) through a connecting opening (2c) connecting the valve housing parts (1a, 1b) with each other and which border both in the closed and open position of the double seat valve (1) a leakage cavity (9), which is connected with the surroundings of the double-seat valve (1) via a tubular shaft (4b/4c) arranged on a second closing element (4), in which a drainage hole (4d) is arranged, wherein a fixed, cylindrical annular second seat ring (50) is provided, which received in a sealing manner radially outside in a cylindrical third seat (2b) designed in the connecting opening (2c), which forms a cylindrical first seat (5e) radially inside in a passage hole (5i) connected in a fluid-penetrable manner with the connecting opening (2c), which runs coaxially to the connecting opening (2c) and is connected with the latter in a fluid-penetrable manner and which is supported in an unrelocatable manner via at least one modified connecting bar (50a) in the first valve housing part (1a), on its side lying opposite the second seat ring (50), wherein in the closed position the first closing element (3) is received in a sealing manner in the first seat (5e), and in the course of its opening movement comes into sealing abutment with a second closing element (4), which is associated with a cylindrical second seat (2a) designed in the connecting opening (2c), and in a further opening movement the latter is also transferred into an open position (H), wherein the first closing element (3) on a first end section (3**) has a first seal (6), which radially seals in the first seat (5e), wherein the second closing element (4) on its end facing the first closing element (3) has a recess (4f) with a mainly cylindrical circumferential wall (4h) that is flush with the first seat (5e) and the recess (4f) is dimensioned to receive in a sealing manner the first end section (3**) and the radial first seal (6) of the first closing element (3) during the opening movement before the larger closing element opens, with closing elements (3, 4), that can independently of each other be transferred gap wide by a partial lift, into a seat cleaning position for the purpose of rinsing their coaxial seats (5e, 2a), wherein the second closing element (4) can be transferred through a second partial lift (T2) in the same direction as the opening movement, and the first closing element (3) through a first partial lift (T1) in the direction opposed to the opening movement, each into their respective seat cleaning position, **characterized in that** the second seat (2a) has a diameter that is smaller than the diameter of the third seat (2b) associated with the second seat ring (50), wherein a transition surface (2e) is provided between the second and the third seats (2a, 2b) and wherein an annular, second recess (5c) in the form of a deflection surface (5b) is arranged in the front face of the second seat ring (50) facing the leakage cavity (9).

21. The double-seat valve according to claim 20,
**characterized in that**
a cylindrical appendage (3**, 4*) is arranged on each closing element (3, 4) on the leakage cavity side, which forms an annular choke gap (D1, D2) with the associated seat (5e, 2a).

22. The double-seat valve according to claim 20 or 21,
**characterized in that**
the second closing element (4) is led with its front face to the second seat ring (50) by a pickup lift (h) directed opposite the opening movement, in terms of time, right before the opening movement of the first closing element (3) and comes to rest directly adjacent to the first seat (5e).

23. The double-seat valve according to one of claims 20 through 22,
**characterized in that**
a first displacement rod (3a) connected with the first closing element (3), designed as a hollow rod and inserted into the drive (11) is designed in its area penetrating the associated first valve housing part (1a) as a first pressure compensation piston (3a*), the outer diameter of which reaches up to the outer diameter of the first closing element (3) in the borderline case.

24. The double-seat valve according to claim 23,
**characterized in that**
a second displacement rod (4a) connected with the second closing element (4) penetrates concentrically the first displacement rod (3a) designed as a hollow rod and is inserted into the drive (11).

25. The double-seat valve according to one of claims 20 through 24,
**characterized in that**
the second seat ring (50) with a stop surface (5d) arranged on its front face abuts against the transition surface (2e), and namely directly adjacent to the second seat (2g; 2a); in the further progression of the front face of the second seat ring (50), which protrudes radially inward with respect to the second seat (2a), the annular second recess (5c) is provided, the contour (K) of which, seen in the meridian section, has a kink-free progression, begins radially outward with a first section of the rotation-symmetrical deflection surface (5b) and opens radially inward with a last section under a sharp third deflection angle (β) into the cylindrical boundary surface of the first seat (5e); the deflection surface (5b) and the stop surface (5d) form a second circumferential edge (U2), which directly borders a first end section (2g) of the second seat (2a); seen in the meridian section, a directional vector in the opening point of the deflection surface (5b) points into the drainage hole (4d) that is centrally arranged in the second closing element (4), without colliding in a dynamic pressure creating manner with the first or the second closing element (3, 4) in the region of its areas bounding the leakage cavity (9); and a front side boundary of the second appendage (4*), facing the leakage cavity (9), has an axial safety distance (x) from the directional vector at an outlet point of the transition surface (2e), formed as a first circumferential edge (U1) into the first end section (2g).

26. The double-seat valve according to claim 25,
**characterized in that**
a directional vector at the starting point of the contour (K) is flush with the first end section (2g).

27. The double-seat valve according to one of claims 25 to 26,
**characterized in that**
the first circumferential edge (U1) formed by the transition surface (2e) and the first end section (2g) is rounded with a smallest possible first edge rounding (r2).

28. The double-seat valve according to one of claims 25 to 27,
**characterized in that**
the second circumferential edge (U2) is rounded with a smallest possible second edge rounding (r3).

29. The double-seat valve according to one of claims 24 to 28,
**characterized in that**
the second displacement rod (4a) continues flying through the leakage hole (4d) and is permanently connected with the latter via at least one mainly radially oriented traverse (4e) on an end of the second closing element (4) facing away from the first closing element (3).

## Revendications

1. Soupape à double siège avec deux organes de fermeture (3, 4) disposés en série, mobiles l'un par rapport à l'autre, constitués sous forme de pistons de tiroir, qui, dans la position de fermeture de la soupape à double siège (1), empêchent le débordement de fluides à partir d'une partie de corps de soupape (1a; 1b) vers une autre partie de corps de soupape (1b ; 1a) à travers une ouverture de raccordement (2c) raccordant entre les elles les parties de corps de soupape (1a, 1b) et qui délimitent, aussi bien dans la position de fermeture que dans la position d'ouverture de la soupape à double siège (1), une cavité de fuite (9) qui est raccordée à l'environnement de la soupape à double siège (1) par le biais d'un arbre tubulaire (4b/4c), formé sur le deuxième organe de fermeture (4), arbre dans lequel est disposé un alésage d'évacuation (4d), **caractérisée en ce qu'**il est prévu une partie de tiroir (5) déplaçable axialement et de forme annulaire cylindrique qui, aussi bien dans la position de fermeture que dans la position d'ouverture de la soupape à double siège (1), est logée de façon étanche radialement et extérieurement dans une troisième surface de siège (2b) cylindrique constituée dans l'ouverture de raccordement (2c) et qui constitue, radialement et intérieurement, une première surface de siège (5e) cylindrique dans un alésage de passage (5i) raccordé, de façon perméable aux fluides, à l'ouverture de raccordement (2c), première surface de siège (5e) qui est coaxiale à l'ouverture de raccordement (2c), le premier organe de fermeture (3) étant, dans la position de fermeture, logé de façon étanche dans la première surface de siège (5e) et venant en appui étanche, au cours de son mouvement d'ouverture, sur le deuxième organe de fermeture (4) qui est affecté à une deuxième surface de siège (2a) cylindrique réalisée dans l'ouverture de raccordement (2c), et ce dernier étant transféré également dans une position d'ouverture (H) lors de la poursuite du mouvement d'ouverture, le premier organe de fermeture (3) présentant, au niveau d'un premier tronçon extrême (3**), un premier joint d'étanchéité (6) qui assure une étanchéité radialement dans la première surface de siège (5e), le deuxième organe de fermeture (4) possédant, à son extrémité tournée vers le premier organe de fermeture (3), un évidement (4f) avec une paroi circonférentielle (4h), essentiellement cylindrique, en affleurement avec la première surface de siège (5e), et l'évidement (4f) étant dimensionné de sorte que, pour loger de façon étanche, pendant le mouvement d'ouverture, le premier tronçon extrême (3**) et le premier joint d'étanchéité (6) radial du premier organe de fermeture (3) avant que le deuxième organe de fermeture (4) ouvre, avec respectivement une position de nettoyage de siège pour les organes de fermeture (3, 4) et la partie de tiroir (5) en vue du lavage de leurs surfaces de siège (5e, 2a, 2b) coaxiales, le deuxième organe de fermeture (4) pouvant être transféré dans sa position de nettoyage de siège respective par une deuxième course partielle (T2) de même direction que le mouvement d'ouverture, et la partie de tiroir (5) pouvant être transférée dans sa position de nettoyage de siège respective par une première course partielle (T1) de direction opposée au mouvement d'ouverture, la deuxième surface de siège (2a) présentant un diamètre qui est inférieur au diamètre de la troisième surface de siège (2b) affectée à la partie de tiroir (5), une surface de transition (2e) étant prévue entre la deuxième et la troisième surface de siège (2a, 2b), et un deuxième évidement (5c) annulaire sous forme de surface de renvoi (5b) étant disposé dans le côté frontal de la partie de tiroir (5) tourné vers la cavité de fuite (9).

2. Soupape à double siège selon la revendication 1,
**caractérisée en ce**
**qu'**un premier appendice (3*) cylindrique est disposé sur le premier organe de fermeture (3) de façon éloignée de la cavité de fuite et forme, après l'exécution de la première course partielle (T1), un premier interstice d'étranglement (D1) annulaire avec la première surface de siège (5e) affectée.

3. Soupape à double siège selon la revendication 1 ou la revendication 2,
**caractérisée en ce**
**qu'**un troisième appendice (5*) cylindrique est disposé sur la partie de tiroir (5) côté cavité de fuite et forme, après l'exécution de la première course partielle (T1), un troisième interstice d'étranglement (D3) annulaire avec la troisième surface de siège (2b) affectée.

4. Soupape à double siège selon une des revendications 1 à 3,
**caractérisée en ce**
**qu'**un deuxième appendice (4*) cylindrique est prévu sur le deuxième organe de fermeture (4) côté cavité de fuite et forme, après l'exécution de la deuxième course partielle (T2), un deuxième interstice d'étranglement (D2) annulaire avec la deuxième surface de siège (2a) affectée.

5. Soupape à double siège selon une des revendications 1 à 4,
**caractérisée en ce que**,
vu chronologiquement, immédiatement avant le mouvement d'ouverture du premier organe de fermeture (3), le deuxième organe de fermeture (4) est rapproché, avec sa face frontale, de la partie de tiroir (5) par une course de récupération (h) de direction opposée au mouvement d'ouverture, et y vient en appui, de façon immédiatement adjacente à la première surface de siège (5e).

6. Soupape à double siège selon une des revendications 1 à 5,
**caractérisée en ce que**
l'arbre tubulaire (4b/4c) est, dans sa zone traversant la deuxième partie de corps de soupape (1b) affectée, constitué en tant que deuxième piston d'équilibrage de pression (4c) dont le diamètre extérieur arrive dans le cas limite jusqu'au diamètre extérieur du deuxième organe de fermeture (4).

7. Soupape à double siège selon une des revendications 1 à 6,
**caractérisée en ce que**
la section de traversée de l'alésage d'évacuation (4d) est égale à la section de traversée de la plus grande conduite tubulaire raccordée aux parties de corps de soupape (1a, 1b).

8. Soupape à double siège selon une des revendications 1 à 7,
**caractérisée en ce que**
la partie de tiroir (5) est, par le biais de nervures de raccordement (5a) perméables aux fluides, raccordée à un cylindre récepteur (5f) en forme de pot, ouvert vers la partie de tiroir (5), qui traverse de façon déplaçable et étanche la première partie de corps de soupape (1a) affectée et se prolonge, à son extrémité éloignée de la partie de tiroir (5), dans une troisième tige de déplacement (5g) qui est réalisée en tant que tige creuse et qui est introduite dans un entraînement (11).

9. Soupape à double siège selon la revendication 8,
**caractérisée en ce**
**qu'**une première tige de déplacement (3a), raccordée au premier organe de fermeture (3), réalisée en tant que tige creuse et introduite dans l'entraînement (11), traverse le cylindre récepteur (5f) de façon déplaçable et concentrique, est étanche par rapport au cylindre récepteur (5f) au niveau de son point d'entrée dans ce dernier et est, dans la zone de mise en prise avec le cylindre récepteur (5f), constituée en tant que premier piston d'équilibrage de pression (3a*) dont le diamètre extérieur arrive dans le cas limite jusqu'au diamètre extérieur du premier organe de fermeture (3).

10. Soupape à double siège selon la revendication 9,
**caractérisée en ce**
**qu'**une deuxième tige de déplacement (4a) raccordée au deuxième organe de fermeture (4) traverse de façon concentrique la première tige de déplacement (3a) réalisée en tant que tige creuse et est introduite dans l'entraînement (11).

11. Soupape à double siège selon une des revendications 1 à 10,
**caractérisée en ce que**,
dans sa position de fermeture, la partie de tiroir (5) est, avec une surface de butée (5d) disposée sur son côté frontal, en appui contre la surface de transition (2e), et cela de façon directement adjacente à la deuxième surface de siège (2g ; 2a), **en ce que**, dans la suite du tracé du côté frontal du troisième appendice (5*), il est prévu le deuxième évidement (5c) annulaire dont le contour (K), vu en coupe méridienne, présente un tracé exempt de coude, commence radialement et extérieurement par un premier tronçon de la surface de renvoi (5b) à symétrie de révolution et débouche, radialement et intérieurement, par un dernier tronçon sous un troisième angle de renvoi (β) aigu, dans le plan d'enveloppe cylindrique de la première surface de siège (5e), **en ce que** la surface de renvoi (5b) et la surface de butée (5d) constituent une deuxième arête périphérique (U2) qui, dans la position de fermeture de la partie de tiroir (5), est immédiatement adjacente à un premier tronçon extrême (2g) de la deuxième surface de siège (2a), **en ce que**, vu en coupe méridienne, un vecteur directionnel au point de débouché de la surface de renvoi (5b) est dirigé vers l'alésage d'évacuation (4d) disposé de façon centrée dans le deuxième organe de fermeture (4) sans entrer en collision, en formant une pression dynamique, avec le premier ou le deuxième organe de fermeture (3, 4) dans la zone de leurs zones bordant la cavité de fuite (9), et **en ce qu'**une limitation, côté frontal, tournée vers la cavité de fuite (9), du deuxième organe de fermeture (4) possède une distance de sécurité axiale (x) au vecteur directionnel au niveau d'un emplacement de sortie, constitué en tant que première arête périphérique (U1), de la surface de transition (2e), vers le premier tronçon extrême (2g).

12. Soupape à double siège selon la revendication 11,
**caractérisée en ce**
**qu'**un vecteur directionnel affleure, au niveau du point initial du contour (K), avec le premier tronçon extrême (2g).

13. Soupape à double siège selon une des revendications 11 ou 12,
**caractérisée en ce que**
la première arête périphérique (U1) formée par la surface de transition (2e) et le premier tronçon extrême (2g) est arrondie avec un premier arrondi d'angle (r2) le plus petit possible.

14. Soupape à double siège selon une des revendications 11 à 13,
**caractérisée en ce que**
la deuxième arête périphérique (U2) est arrondie avec un deuxième arrondi d'angle (r3) le plus petit possible.

15. Soupape à double siège selon une des revendications 10 à 14,
**caractérisée en ce que**
la deuxième tige de déplacement (4a) se prolonge en flottant à travers l'alésage d'évacuation (4d) et est, au niveau d'une extrémité du deuxième organe de fermeture (4) éloignée du premier organe de fermeture (3), raccordée de façon fixe au deuxième organe de fermeture (4) par le biais d'au moins une traverse (4e) orientée essentiellement de façon radiale.

16. Soupape à double siège selon une des revendications 11 à 15,
**caractérisée en ce**
**qu'**un deuxième tronçon extrême (5**) de la partie de tiroir (5) présente, radialement et extérieurement, à la suite de la surface de butée (5d) un effilement progressif (5h) périphérique annulaire vers la surface de butée (5d) sous un angle d'effilement progressif (λ) qui est dimensionné de sorte qu'une troisième arête périphérique (U3) formée par arrondi entre l'effilement progressif (5h) et un troisième diamètre (d3) de la partie de tiroir (5), vu dans la direction radiale, se déplace le plus loin possible vers l'extérieur et est rapprochée le plus près que cela est admissible du tracé de la surface de transition (2e) défini par le rayon d'arrondi (r1) et y forme un emplacement de centrage (Z) périphérique annulaire.

17. Soupape à double siège selon une des revendications 1 à 16,
**caractérisée en ce que**
les positions de fermeture et d'ouverture des organes de fermeture (3, 4) sont détectées par le biais de tiges de déplacement (3a, 4a) actionnant ces organes, au moyen d'un premier ou d'un deuxième détecteur de position (15.1 ; 15.2) qui sont disposés dans une tête de commande sur le côté d'un entraînement (11) qui est éloigné de la soupape à double siège (1).

18. Soupape à double siège selon la revendication 17,
**caractérisée en ce que**
la deuxième course partielle (T2) du deuxième organe de fermeture (4) est détectée par le biais de la deuxième tige de déplacement (4a) au moyen d'un troisième détecteur de position (15.3) qui est disposé dans la tête de commande.

19. Soupape à double siège selon la revendication 17 ou la revendication 18,
**caractérisée en ce que**
la première course partielle (T1) de la partie de tiroir (5) est détectée par le biais d'un quatrième détecteur de position (15.4) qui détecte le cylindre récepteur (5f) qui est raccordé à la partie de tiroir (5) et qui est extrait de la première partie de corps de soupape (1a), et qui est disposé entre la première partie de corps de soupape (1a) et l'entraînement (11).

20. Soupape à double siège avec deux organes de fermeture (3, 4) disposés en série, mobiles l'un par rapport à l'autre, constitués sous forme de pistons de tiroir, qui, dans la position de fermeture de la soupape à double siège (1), empêchent le débordement de fluides à partir d'une partie de corps de soupape (1a; 1b) vers une autre partie de corps de soupape (1b ; 1a) à travers une ouverture de raccordement (2c) raccordant entre elles les parties de corps de soupape (1a, 1b) et qui délimitent, aussi bien dans la position de fermeture que dans la position d'ouverture de la soupape à double siège (1), une cavité de fuite (9) qui est raccordée à l'environnement de la soupape à double siège (1) par le biais d'un arbre (4b/4c) tubulaire, formé sur le deuxième organe de fermeture (4), arbre dans lequel est disposé un alésage d'évacuation (4d), une deuxième bague de siège (50) fixe, annulaire et cylindrique étant prévue, qui est logée de façon étanche, radialement et extérieurement, dans une troisième surface de siège (2b) cylindrique constituée dans l'ouverture de raccordement (2c), et qui constitue, radialement et intérieurement, dans un alésage de passage (5i) raccordé de façon perméable aux fluides à l'ouverture de raccordement (2c), une première surface de siège (5e) cylindrique qui est coaxiale à l'ouverture de raccordement (2c) et est raccordée de façon perméable aux fluides à cette ouverture, deuxième bague de siège (50) qui s'appuie de façon non déplaçable, par le biais d'au moins une nervure de raccordement (50a) fixe, dans la première partie de corps de soupape (1a) sur le côté de cette dernière qui est opposé à la deuxième bague de siège (50), le premier organe de fermeture (3) étant, dans la position de fermeture, logé de façon étanche dans la première surface de siège (5e) et venant, au cours de son mouvement d'ouverture, en appui étanche sur le deuxième organe de fermeture (4) qui est affecté à une deuxième surface de siège (2a) cylindrique réalisée dans l'ouverture de raccordement (2c), et le deuxième organe de fermeture (4) étant également transféré dans une position d'ouverture (H) lors de la poursuite du mouvement d'ouverture, le premier organe de fermeture (3) présentant, au niveau d'un premier tronçon extrême (3**), un premier joint d'étanchéité (6) qui assure l'étanchéité radialement dans la première surface de siège (5e), le deuxième organe de fermeture (4) possédant, à son extrémité tournée vers le premier organe de fermeture (3), un évidement (4f) avec une paroi circonférentielle (4h), essentiellement cylindrique, en affleurement avec la première surface de siège (5e), et l'évidement (4f) étant dimensionné de sorte que, pour loger de façon étanche, pendant le mouvement d'ouverture, le premier tronçon extrême (3**) et le premier joint d'étanchéité (6) radial du premier organe de fermeture (3) avant que le deuxième organe de fermeture (4) ouvre, avec des organes de fermeture (3, 4) qui peuvent être transférés, indépendamment l'un de l'autre, par une course partielle, respectivement sur une distance d'interstice, dans une position de nettoyage de siège en vue du lavage de leurs surfaces de siège (5e, 2a) coaxiales, le deuxième organe de fermeture (4) pouvant être transféré dans sa position de nettoyage de siège respective par une deuxième course partielle (T2) de même direction que le mouvement d'ouverture, et le premier organe de fermeture (3) pouvant être transféré dans sa position de nettoyage de siège respective par une première course partielle (T1) de direction opposée au mouvement d'ouverture, **caractérisée en ce que** la deuxième surface de siège (2a) présente un diamètre qui est inférieur au diamètre de la troisième surface de siège (2b) affectée à la deuxième bague de siège (50), une surface de transition (2e) étant prévue entre la deuxième et la troisième surface de siège (2a, 2b), et un évidement (5c) annulaire sous forme de surface de renvoi (5b) étant disposé dans le côté frontal de la deuxième bague de siège (50) tourné vers la cavité de fuite (9).

21. Soupape à double siège selon la revendication 20,
**caractérisée en ce**
**qu'**un appendice (3**, 4*) cylindrique est disposé sur chaque organe de fermeture (3, 4) côté cavité de fuite, et forme un interstice d'étranglement (D1, D2) annulaire avec la surface de siège (5e, 2a) affectée.

22. Soupape à double siège selon la revendication 20 ou la revendication 21,
**caractérisée en ce que**,
vu chronologiquement, immédiatement avant le mouvement d'ouverture du premier organe de fermeture (3), le deuxième organe de fermeture (4) est rapproché, avec sa face frontale, de la deuxième bague de siège (50) par une course de récupération (h), de direction opposée au mouvement d'ouverture, et y vient en appui, de façon immédiatement adjacente à la première surface de siège (5e).

23. Soupape à double siège selon une des revendications 20 à 22,
**caractérisée en ce**
**qu'**une première tige de déplacement (3a), raccordée au premier organe de fermeture (3), réalisée en tant que tige creuse et introduite dans un entraînement (11), est constituée en tant que premier piston d'équilibrage de pression (3a*) dans sa zone traversant la première partie de corps de soupape (1a) affectée, piston d'équilibrage de pression (3a*) dont le diamètre extérieur arrive dans le cas limite jusqu'au diamètre extérieur du premier organe de fermeture (3)

24. Soupape à double siège selon la revendication 23,
**caractérisée en ce**
**qu'**une deuxième tige de déplacement (4a) raccordée au deuxième organe de fermeture (4) traverse de façon concentrique la première tige de déplacement (3 a) réalisée en tant que tige creuse et est introduite dans l'entraînement (11).

25. Soupape à double siège selon une des revendications 20 à 24,
**caractérisée en ce que**
la deuxième bague de siège (50), par une surface de butée (5d) disposée sur son côté frontal, appuie contre la surface de transition (2e), et cela de façon directement adjacente à la deuxième surface de siège (2g ; 2a), **en ce que**, dans la suite du tracé du côté frontal de la deuxième bague de siège (50) qui fait saillie radialement vers l'intérieur par rapport à la deuxième surface de siège (2a), il est prévu le deuxième évidement (5c) annulaire dont le contour (K), vu en coupe méridienne, présente un tracé exempt de coude et commence, radialement et extérieurement, par la surface de renvoi (5b) à symétrie de révolution et débouche, radialement et intérieurement, sous un troisième angle de renvoi (β) aigu, dans le plan d'enveloppe cylindrique de la première surface de siège (5e), **en ce que** la surface de renvoi (5b) et la surface de butée (5d) constituent une deuxième arête périphérique (U2) qui est immédiatement adjacente à un premier tronçon extrême (2g) de la deuxième surface de siège (2a), **en ce que**, vu en coupe méridienne, un vecteur directionnel au point de débouché de la surface de renvoi (5b) est dirigé vers l'alésage d'évacuation (4d) disposé de façon centré dans le deuxième organe de fermeture (4) sans entrer en collision, en formant une pression dynamique, avec le premier ou le deuxième organe de fermeture (3, 4) dans la zone de leurs zones bordant la cavité de fuite (9), et **en ce qu'**une limitation, côté frontal, tournée vers la cavité de fuite (9), du deuxième appendice (4*) possède une distance de sécurité axiale (x) au vecteur directionnel au niveau d'un emplacement de sortie, constitué en tant que première arête périphérique, (U1) de la surface de transition (2e), vers le premier tronçon extrême (2g).

26. Soupape à double siège selon la revendication 25,
**caractérisée en ce**
**qu'**un vecteur directionnel affleure avec le premier tronçon extrême (2g) au point initial du contour (K).

27. Soupape à double siège selon une des revendications 25 à 26,
**caractérisée en ce que**
la première arête périphérique (U1) formée par la surface de transition (2e) et le premier tronçon extrême (2g) est arrondie avec un arrondi d'angle (r2) le plus petit possible.

28. Soupape à double siège selon une des revendications 25 à 27,
**caractérisée en ce que**
la deuxième arête périphérique (U2) est arrondie avec un deuxième arrondi d'angle (r3) le plus petit possible.

29. Soupape à double siège selon une des revendications 24 à 28,
**caractérisée en ce que**
la deuxième tige de déplacement (4a) se prolonge en flottant à travers l'alésage d'évacuation (4d) et est, au niveau d'une extrémité du deuxième organe de fermeture (4) éloignée du premier organe de fermeture (3), raccordée de façon fixe au deuxième organe de fermeture (4) par le biais d'au moins une traverse (4e) orientée essentiellement de façon radiale.
